# EUROPEAN PATENT SPECIFICATION

(11) **EP 1 249 055 B1**
(45) Date of publication and mention of the grant of the patent: **11.08.2010**
(21) Application number: 01926396.1
(22) Date of filing: 21.03.2001
(51) Int. Cl.: H01Q 1/36, H01Q 1/22, B65D 5/42, G06K 19/073, G06K 19/077, G08B 13/24

(54) **A TAMPER INDICATING RADIO FREQUENCY IDENTIFICATION LABEL**
FUNK-IDENTIFIKATIONSETIKETT MIT ANZEIGE EINER UNERLAUBTEN MANIPULATION
ETIQUETTE D'IDENTIFICATION RADIOFREQUENCE A INDICATION DE VIOLATION

(30) Priority: 21.03.2000 US 190936 P; 06.04.2000 US 194891 P; 06.04.2000 US 194890 P; 14.04.2000 US 197417 P; 16.11.2000 US 249027 P; 12.12.2000 US 254575 P; 26.02.2001 US 270904 P
(43) Date of publication of application: 16.10.2002
(73) Proprietor: Mikoh Corporation, McLean, VA 22102 (US)
(72) Inventor: ATHERTON, Peter, Vienna, VA 22181 (US)
(74) Representative: Haley, Stephen
(86) International application number: PCT/US2001/008992
(87) International publication number: WO 2001/071848

(56) References cited:
- EP-A- 0 955 616
- WO-A-97/38364
- US-A- 5 982 284
- US-A- 6 147 662

## Description

### Background of the Invention

Radio Frequency Identification (RFID) is being used increasingly as a means to identify goods at a distance, without requiring physical contact or even line of sight access to the goods. RFID enables information about an item to be stored on an item, and in some implementations also allows this stored information to be modified at a distance. The most compact and cost effective means to provide this RFID capability is by means of a pressure sensitive (i.e. self adhesive) label incorporating an RFID capability.

The ability to detect remotely whether a pressure sensitive label or seal applied to an item has been tampered with or removed is becoming increasingly important in order to detect theft, product substitution, tampering, warranty violation and other problems.

A disadvantage of current pressure sensitive label technology is that it does not allow the remote determination of whether or not a label has been tampered with or removed and relocated.

EP-A-0955616, WO-A-97/38364, US-A-5767772, and US-A-5644295 all disclose RFID structures.

According to the present invention there is provided a tamper indicating label comprising:
an RFID layer comprising RFID components providing an RFID function;
an adhesive layer supporting the RFID layer;
a destructible electrically conducting path sandwiched between the RFID layer and the adhesive layer so that at least a portion of the destructible conducting path is in contact with the adhesive layer, whereby the destructible conducting path is disrupted or modified when the label is tampered, thereby modifying the RFID function of the RFID layer;
characterized by:
   a pattern of an adhesion modifying coating between the RFID layer and the adhesive layer, the adhesion modifying coating modifying adhesion characteristics of the destructible conducting path, thereby enhancing the destructibility of the destructible conducting path.

In a further embodiment, at least a part of the destructible conducting path may in contact with the adhesive layer. The destructible conducting path can thereby be modified when the label is at least partially removed from a surface, and in turn, modify RFID characteristics of the label, indicating tampering.

According to another embodiment, the invention includes an RFID system. A substrate having a top and a bottom surface is provided. RFID electronic components are applied to the bottom surface of the substrate. A conductive layer may also be formed in a pattern on the bottom surface of the substrate. An adhesive layer may support the substrate such that the RFID electronic components and the conductive layer are sandwiched between the substrate and the adhesive layer. The adhesive layer, the substrate, and conductive layer should have relative adhesion strengths such that when the system is partially removed from a surface to which it has been applied, at least one of the RFID components and the conductive layer is altered to modify the RFID characteristics of the system.

According to another embodiment of the invention, a security apparatus for indicating tampering is provided. Here, an object may be provided with a conducting path having at least two end points. A security label is arranged on the object. The security label may be a tamper indicating label as described above and should include RFID components and a destructible conducting path between the RF components and each individual end point.

In one of the more detailed embodiments of the invention, a security label is combined with an object. The security label may comprise RFID components and means for attaching the RFID components to the object. Destructible electronics may be connected to the RFID components. The destructible electronics can be broken when the label is at least partially removed from the object. The object comprises a surface for receiving the security label and a conducting path having two ends. The ends of the conducting path may be connected to the destructible electronics thereby forming a circuit through the RFID components, the destructible electronics and the conducting path. The RFID characteristics of the RFID components may be modified if the connection between the end points and the destructible electronics is broken.

According to another embodiment of the invention, a substrate having first and second portions is provided. The second portion of the substrate may be adapted to be looped back and connected to the first portion. An RFID transponder can be arranged on the substrate. A tamper track may be coupled to the RFID transponder and should extend at least partially into the second portion of the substrate. An adhesive layer should be provided on at least a part of the second portion of the substrate that includes the tamper track. The tamper track in that part of the substrate may be adapted to be modified when the label is tampered with due to the relative adhesion strength of the tamper track.

### Brief Description of the Figures

The present invention will now be described by way of non-limiting example with reference to the accompanying drawings, wherein:
Figure 1 is a schematic illustration of the general design of a tamper indicating RFID label which is the subject of the present invention;
Figures 2a and 2b are a schematic illustration of a preferred embodiment and characteristics of the tamper indicating layer within a tamper indicating RFID label;
Figure 3 is a schematic illustration of a preferred embodiment of the tamper indicating conducting strip in the tamper indicating layer of a tamper indicating RFID label;
Figure 4 is a schematic illustration of a preferred embodiment of a tamper indicating RFID label in which the tamper indicating conducting strip is in series with an induction loop in said label;
Figure 5 is a schematic illustration of a preferred embodiment of a tamper indicating RFID label in which the tamper indicating conducting strip forms the induction loop of said label;
Figure 6 is a schematic illustration of a preferred embodiment of a tamper indicating RFID label in which the tamper indicating conducting strips form the antenna of said label;
Figure 7 is a schematic illustration of an variation of RFID label of Figure 6;
Figure 8 is a schematic illustration of a method ofmanufacturing an RFID label according to an embodiment of the invention;
Figure 9 is a schematic illustration of another embodiment of the invention;
Figure 10 is a schematic illustration of the top view, side view and bottom view of a preferred embodiment of a tamper indicating RFID label which is the subject of the present invention;
Figure 10a is a schematic illustration of the detail of a portion of the tamper indicating RFID label of Figure 1;
Figure 11 is a schematic illustration of a variation of the RFID label of Figure 10;
Figure 12 is a schematic illustration of loop tag based on the tamper indicating label design of figures 1 and 2;
Figure 13 is a schematic illustration of the use of a loop tag of the type illustrated in Figure 3;
Figure 14 is a schematic illustration of an object having a RFID label applied.

### Detail Description of the Invention

The term "passive", as used herein, refers to an RFID label or transponder which does not include an on-board power source such as a battery. The term "active", as used herein, refers to an RFID label or transponder which includes an on-board power source such as a battery. The advantages of an active RFID label, relative to a passive RFID label, is that an active RFID label can include continuous on-board functions such as a clock, and can usually enable longer read and write distances. A disadvantage of active RFID labels, relative to passive RFID labels, is that active RFID labels are physically larger due to the need to carry an on-board power source.

It should be appreciated that the terms label and tag may be used interchangeably in this document. Where the term label is used, the term tag may validly be substituted. The essential difference between the two is the thickness and types of material used in the construction. In general a label will be made from thin, flexible materials, while a tag will be made from thicker, stiffer materials. A tag may, for example, be similar to a plastic card with a pressure sensitive adhesive on the underside. Such tags may be used, for example, as compliance plates or rating plates or specification plates on various types of equipment. A tag, because of its greater thickness, is better suited to active RFID technology.

It should be appreciated that the illustrations herein are not to scale. In general the thickness of the label constructions (and component layers thereof) illustrated in the figures have been exaggerated, to illustrate more clearly the internal structures and components.

In general, a tamper indicating label is provided. The label may include RFID components and a tamper track coupled to the RFID components. The tamper track should be constructed from a destructible conducting path. Additionally, the tamper track can be formed such that it is damaged when the label is tampered. In one embodiment, adhesion characteristics of the tamper track are adapted to break apart the tamper track when the label is tampered, for example, by removal from an object. The RFID components may retain their RFID capability and detect when the tamper track has been damaged to indicate that the label has been tampered. Alternatively, the RFID capability of the RFID components may be disabled when the tamper track is damaged, indicating tampering.

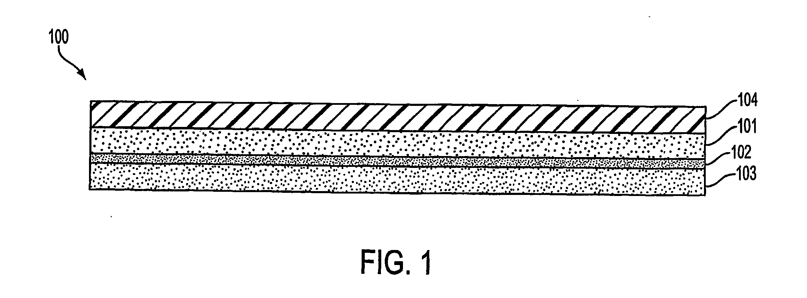

Figure 1 is a schematic illustration of the general design of a tamper indicating RFID label according to an embodiment of the invention. Figure 1 shows schematically a pressure sensitive (i.e. self-adhesive) label 100 in cross sectional view. The label 100 may include four functionally distinct layers.

The RFID layer 101 may be a layer which includes RFID components, for example, an RFID memory chip. The label 100 may in some embodiments provide an "active" RFID capability, in which case the layer 101 can also include a battery or other power source.

The second layer 102 may include one or more thin electrically conducting tracks which should be coupled to the RFID components in the layer 101. The tracks are known herein as "tamper tracks" since they provide a means to detect tampering with or removal of the label 100 from a surface to which it has been applied.

The layer 101 and the layer 102 may together provide an RFID capability. On the other hand, in some embodiments the layer 101 can provide an RFID capability in its own right, while the tamper tracks 102 can modify the RFID performance of the layer 101 depending on whether said tamper tracks 102 are damaged or not.

The RFID capability provided by the layer 101, or the layers 101 and 102 together, usually includes the ability to store information in the RFID memory chip in the layer 101, and the ability to read and modify said stored information from a distance. Additional capabilities, such as the ability to encrypt stored information or control access to the stored information, may also be provided.

The third layer 103 may be an adhesive layer, which in some embodiments is a pressure sensitive adhesive.

The fourth layer 104 is a top-coat layer applied over the top of the RFID layer 101. The top-coat may be applied to protect the RFID layer and to provide a top surface to accept a printing process. The top coat layer 104 is not essential and in some embodiments may not be included. The finished construction is the adhesive label 100.

The tamper tracks 102 should be destructible. When the label 100 is applied to a surface and subsequently tampered or removed, the pressure sensitive adhesive 103 damages the tamper tracks 102 - for example, by tearing all or part of them from the underside of the layer 101 - which in turn affects the RFID performance of the label 100. Since the tamper tracks 102 are electrically connected to the RFID components in the label 100, and may form part of the RFID components of the label 100, the RFID function of the label 100 is modified if the label is applied to a surface and subsequently tampered or removed. In this way tampering with or removal of the label 100 can be detected at a distance via the change in the RFID characteristics and response of the label 100.

The terms "tampering" and "tampered" as used herein refer to complete or partial removal of a tamper indicating label, such as the label 100, from a surface to which it has been applied.

In this document the term "destructible" is used in relation to the tamper tracks 102 in figure 1 and in relation to other tamper tracks throughout the document. In this context the term destructible means that the tamper tracks are designed to be damaged or broken in regions of the label which are tampered.

The tamper tracks 102 may be produced in one of a number of different ways. In one preferred embodiment, the tamper tracks may be produced by printing electrically conducting ink (such as a carbon/graphite based conductive ink or a precious metal ink). In another preferred embodiment the tamper tracks 102 may be produced using electrically conductive adhesive. In another embodiment the tamper tracks may be metallic tracks made of Aluminum, Copper or some other suitable metal.

In general the tamper tracks 102 should be made from a material, such as an electrically conducting ink, which has appropriate electrical properties but which does not have high intrinsic physical strength. In this way the tamper tracks 102 can be more easily disrupted or damaged as the label 100 is partially or completely removed from a surface to which it has been applied.

In some preferred embodiments the destructibility of the tamper tracks 102 may be enhanced by including a thin layer of a suitable adhesion modifying coating on the underside of the layer 101 either between the layer 101 and the tamper tracks 102, or between the tamper tracks 102 and the adhesive 103. At least a part of the tamper tracks should contact the adhesive 103. The layer of adhesion modifying coating may be applied as a uniform layer, or in a specified pattern, or in some other manner such that the properties of the adhesion modifying coating vary across the layer 101. In some embodiments multiple layers of adhesion modifying coating may be applied to "fine tune" the properties of the final composite adhesion modifying coating..

Inclusion of a adhesion modifying coating between the RFID layer 101 and the tamper tracks 102 results in the adhesion of the layers to each other being greater or less in a particular region according to whether the adhesion modifying coating is present or absent in that region. Similarly, inclusion of an adhesion modifying coating between the tamper tracks 102 and the adhesive layer 103 results in the adhesion of the layers to each other being greater or less in a particular region according to whether the adhesion modifying coating is absent or present in that region. Usually, but not necessarily, the adhesion modifying coating reduces the adhesion of two layers which it separates, so that the two layers can be more easily separated.

The relative adhesion between the layer 101, adhesion modifying coating, tamper tracks 102 and adhesive layer 103 can be adjusted so that when the label 100 is applied to a surface and subsequently tampered or removed, the tamper tracks 102 are damaged in a pattern corresponding to the pattern of the adhesion modifying coating. In some embodiments the tamper tracks 102 may be physically separated in a pattern corresponding to the pattern of the adhesion modifying coating, with some of the tamper tracks 102 remaining on the layer 101 and the remainder of the tamper tracks 102 remaining on the adhesive layer 103. This damage to the tamper tracks 102 may affect the RFID performance of the label 100.

The adhesion modifying coating may be a layer of lacquer, or a layer of tamper indicating varnish (for example, similar to that used in some visual tamper indicating label constructions), or a layer of some other suitable material formulation.

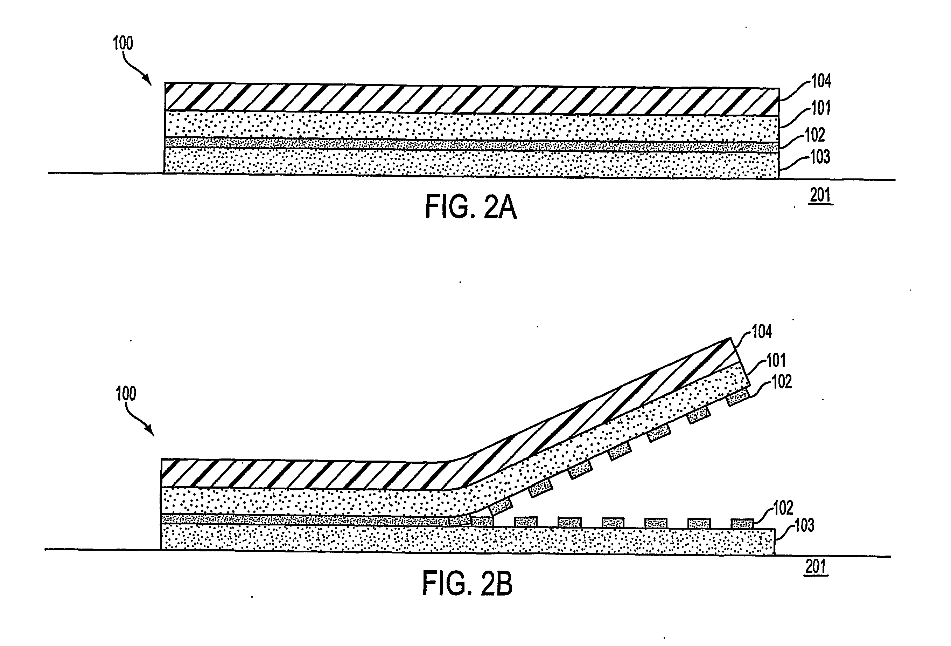

The tampering indicating characteristics of one preferred embodiment of the label 100 are illustrated in figure 2, which shows the label 100 in cross section view before and after removal from a surface 201. Figure 2 illustrates in particular the physical disruption of the tamper tracks 102 during tampering or removal of the label 100. In figure 2(a) the label 100 is shown before removal from the surface 201. Here the tamper tracks 102 are intact and the label 100 exhibits its normal RFID operation. In figure 2(b) the label 100 has been partially removed from the surface 201. As the label 100 is removed, portions of the tamper tracks 102 remain with the top layer 101, and complementary portions of the tamper tracks 102 remain with the adhesive layer 103. The differential separation of the tamper tracks 102 may in some embodiments be enhanced or achieved through the inclusion of an adhesion modifying coating (as described above) in a specified pattern at the interface between the layer 101 and the tamper tracks 102, such that the tamper tracks 102 bond less strongly to the layer 101 where the adhesion modifying coating has been applied and therefore in such regions the tamper tracks 102 remain with the adhesive layer 103 when the label 100 is removed from the surface 201. As the label 100 is removed from the surface 201, the tamper tracks 102 are damaged, and their electrical properties are thereby affected. This in turn affects the RFID properties of the label 100, since the tamper tracks 102 are electrically connected to the layer 101 which includes RFID components. In figure 2 the separation of (i.e. damage to) the tamper tracks 102 during tampering of the label 100 is shown to form a regular repeating pattern. It should be appreciated that the pattern of the separation may instead be irregular and may be on a larger or smaller scale relative to the size of the label 100 or the RFID components in the label 100 than shown in figure 2.

The label 100 may also contain information in another format, such as a barcode, 2D barcode, or some other optical information storage format printed on the top surface of the top coat layer 104.

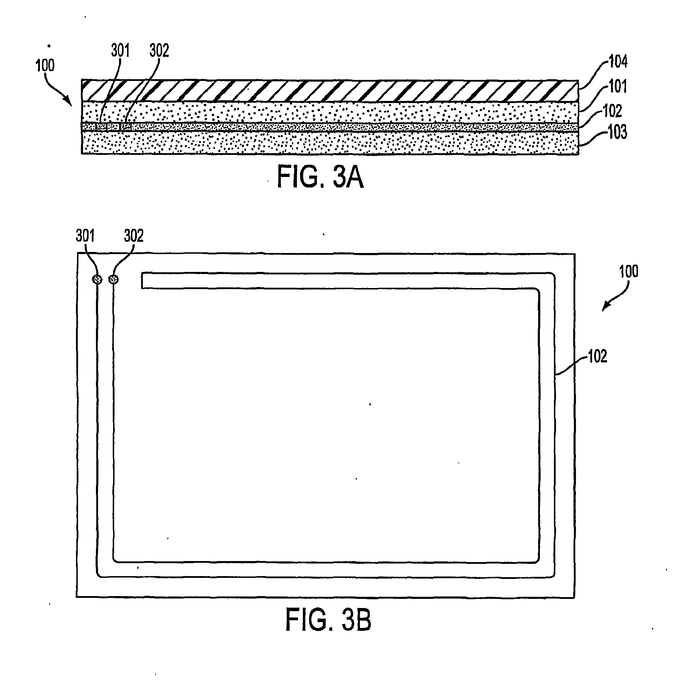

A preferred embodiment of the tamper tracks 102 will now be described with reference to figure 3, which shows an embodiment of the RFID label 100 in cross sectional view and looking from below through the adhesive layer 103 at the tamper tracks 102. In figure 3 the RFID layer 101 has two "through-connect" electrical connection points, 301 and 302, where the electrical circuitry in the RFID layer 101 is connected to the underside of the layer 101. In this embodiment the electrical connection between the points 301 and 302 by means of the tamper track 102 should be intact in order to maintain normal RFID operation of the label 100.

Preferably the tamper track 102 may be disrupted even if only a portion of the label 100 is tampered. In figure 3 the tamper track 102 runs around the perimeter of the underside of the layer 101 between points 301 and 302. This configuration for the tamper track 102 of figure 3 ensures that tampering of even a small portion of the label 100 will result in a break in the tamper track 102 and therefore a break in the electrical connection between the points 301 and 302, which in turn modifies the RFID behavior of the label 100.

It should be appreciated that other configurations of the tamper track 102 could also be employed. For example, in some embodiments the tamper track 102 may form all or part of an antenna, in which case the points 301 and 302 may not be electrically connected to each other via a single tamper track 102.

An RFID label will generally include an electronic memory chip connected to either an induction loop or an antenna. The induction loop or antenna may enable communication and data exchange with a remote reading device. (It should be appreciated that different types of antenna design may be employed.) Other electrical or electronic components may also be included in an RFID label. An active RFID label will include an on-board power source such as a battery.

Preferred embodiments of ways in which the tamper tracks 102 can be configured on the underside of the RFID layer 101 and coupled to the RFID layer 101 will be now be described by way of non-limiting example. It should be appreciated that in some embodiments the tamper tracks 102 may be designed to be destructible in some regions and durable in other regions. For example, the tamper tracks 102 may include some sections which are durable and rugged, joined by sections which are destructible.

The tamper tracks 102 may be connected in one of several different ways to the RFID layer 101, depending on the design and operation of the RFID layer 101. Several non-limiting examples are listed below.
1. The tamper tracks 102 may be connected in series with an induction loop or antenna in the layer 101.
2. The tamper tracks 102 may constitute all or part of the induction loop or antenna of the label 100.
3. The tamper tracks 102 may be part of a tamper-sensing electrical circuit in the label 100 which is separate from the induction loop or antenna of the label 100.

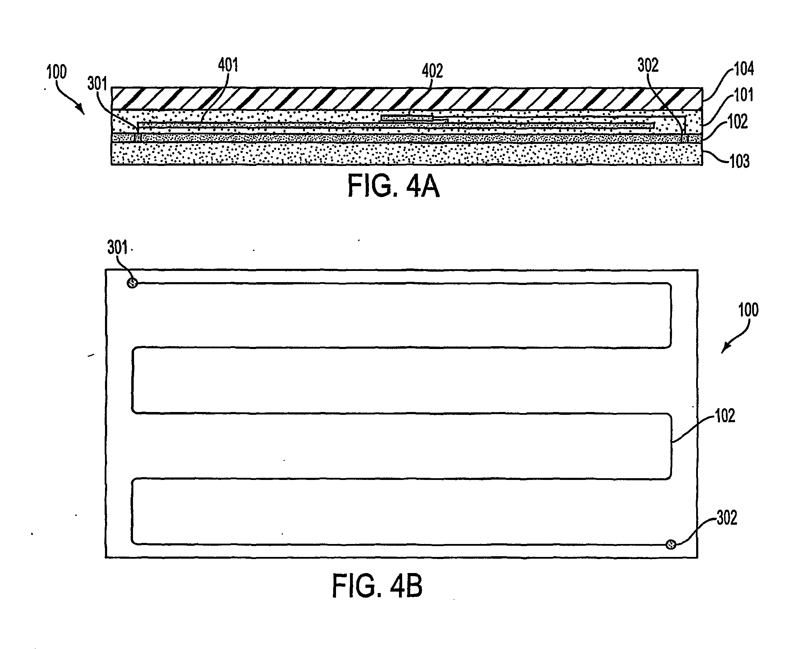

Figures 4 to 7 are schematic illustrations of further preferred embodiments of the tamper indicating RFID label 100, showing both a cross sectional view and a view looking from below through the adhesive layer 103 at the tamper tracks 102.

Figure 4 is a schematic illustration of a preferred embodiment in which the tamper track 102 connects the points 301 and 302 and is in series with an induction loop 401 in the RFID layer 101. The RFID layer 101 may include the induction loop 401 and other components 402, which may be passive or active. For example, the components 402 in one embodiment may be a capacitor which, with the induction loop 401, forms a resonant electrical circuit. Alternatively, the components 402 may include a passive electronic memory chip for storing data. The tamper track 102 should be intact for the RFID label 100 of figure 4 to be operational. When the label 100 is tampered, the tamper track 102 is broken and the RFID function of the label 100 can be disabled or modified. In this way it can be determined whether or not the label 100 has been tampered. An adhesion modifying coating may be included, as described above, to enhance destructibility of the tamper tracks 102.

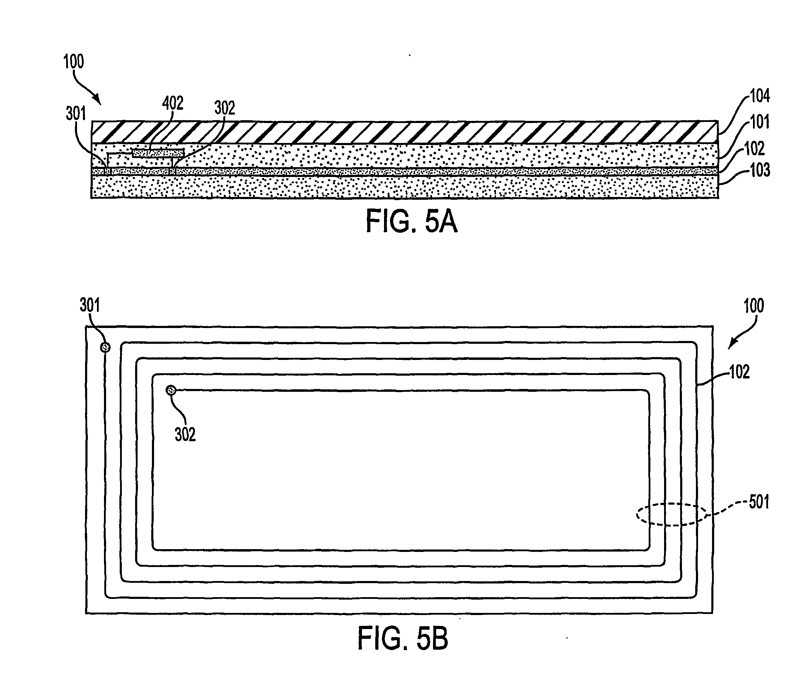

Figure 5 is a schematic illustration of another preferred embodiment in which the tamper track 102 forms an induction loop 501 for the RFID label 100. In figure 5 the through-connect points 301 and 302 are connected to the RFID components 402 in the layer 101. In connecting the points 301 and 302, the tamper track 102 forms a number of loops, with the overall layout of the tamper track 102 acting as an induction loop. Tampering or removing the label 100 results in a break in the tamper track 102, thereby disabling or modifying the RFID function of the label 100. In this way it can be determined whether or not the label 100 has been tampered. An adhesion modifying coating may be included, as described above, to enhance destructibility of the tamper tracks 102.

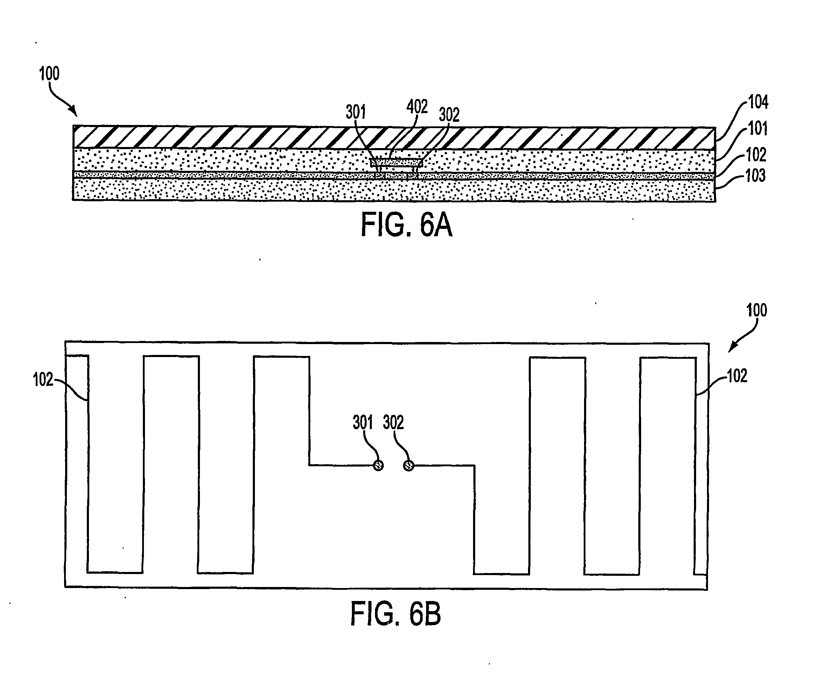

Figure 6 is a schematic illustration of another preferred embodiment, which is a variation on the embodiment of figure 5. In figure 6 the tamper tracks 102 form an antenna, whereas in figure 5 the tamper track 102 forms an induction loop. The principal difference is that in figure 6 the points 301 and 302 are not connected together by a single tamper track 102. Instead there are two tamper tracks 102, one starting at point 301 and the other starting at the point 302. The two tamper tracks 102 form an antenna. In figure 6 a so-called meander antenna is illustrated, although it should be appreciated that other forms of antenna may also be employed. In some antenna designs the points 301 and 302 may be connected to each other by the tamper track 102. In figure 6 the through-connect points 301 and 302 are connected to the RFID components 402. Tampering the label 100 should result in damage to at least one of the tamper tracks 102, thereby affecting the characteristics of the antenna and modifying or disabling the RFID function of the label 100. In this way it can be determined whether or not the label 100 has been tampered. An adhesion modifying coating may be included, as described above, to enhance destructibility of the tamper tracks 102.

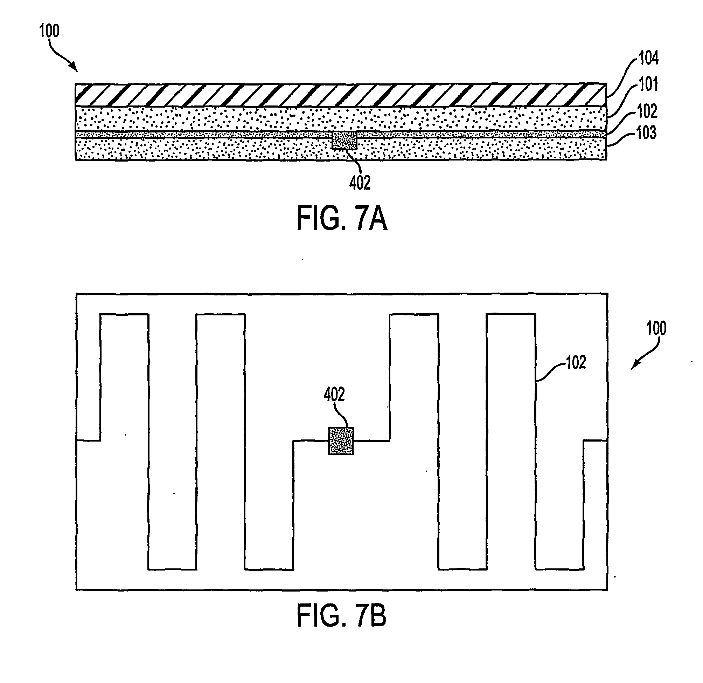

Figure 7 is a schematic illustration of another preferred embodiment, based on the embodiments of figures 5 and 6. The principal difference between the designs illustrated in figures 5 and 6, and the design illustrated in figure 7 is that in the design of figure 7 the RFID components 402 are on the underside of the layer 101. In some embodiments the RFID components 402 may comprise only an RFID memory chip, in which case in the design of figure 7, both the RFID memory chip 402 and the tamper tracks 102 are on the underside of the layer 101. The tamper tracks are designed to be destructible, as described herein. An advantage of the design of figure 7 compared with the designs of figures 5 and 6 is that in the design of figure 7 there is no need for through-connects to the bottom side of the layer 101, since the RFID memory chip is on the bottom side of the layer 101. In the design of figure 7 the tamper tracks 102 may form an induction loop, as in the design of figure 5, or may form an antenna, as in the design of figure 6. In figure 7 an antenna is shown. An adhesion modifying coating may be included, as described above, to enhance destructibility of the tamper tracks 102.

In order to provide an additional indicator of tampering, the label 100 may be designed to show visual evidence of tampering if the label is removed from a surface to which it has been applied. Visual tamper indication can be achieved in several ways. In one embodiment a thin colored layer is applied to the underside of the RFID layer 101. A pattern of adhesion-modifying layer may be applied to the underside of the colored layer. The adhesion-modifying layer may be the same layer or a layer in addition to the adhesion modifying coating described above. The presence of the adhesion-modifying layer modifies the adhesion of the colored layer to the adhesive layer 103 such that when the label 100 is removed from a surface to which it has been applied, the colored layer breaks up. Areas of color may adhere to the adhesive layer 103 and other complementary areas of color may adhere to the RFID layer 101. An alternative to this embodiment is to apply a pattern of said adhesion modifying layer directly to the underside of the RFID layer 101 and apply said thin colored layer to the underside of said adhesion modifying layer. In another embodiment, the adhesion modifying coating may be applied directly to the underside of the RFID layer 101 and a colored adhesive can be used as the adhesive layer 103. In this case, when the label is removed from a surface to which it has been applied, the colored adhesive 103 should break up and areas of the colored adhesive may adhere to the RFID layer 101 and complementary areas of the colored adhesive 103 may adhere to the surface. It should be appreciated that other methods may be used to produce a visual tamper indicating effect.

When using a visual tamper indicating effect, a portion of the RFID layer 101 and top coat 104 (if a top coat 104 is present) should be transparent so the visual effect can be seen by looking through the RFID layer 101 and top coat 104. This enables easy inspection of the visual tamper indicating feature without having to remove the label. The RFID components in the RFID layer 101, such as a memory chip, may not be transparent, but should only occupy a small portion of the surface area.

Additionally, it may be desired to print information or patterns on the label. For example, as described above, a bar code or serial number may be printed on the top surface of the RFID layer 101 or on the top surface of the top coat 104 (if a top coat 104 is present). Enough of the RFID layer 101 and top coat 104 should be transparent to allow the visual tamper indicating feature to be visible.

### Method of Manufacture

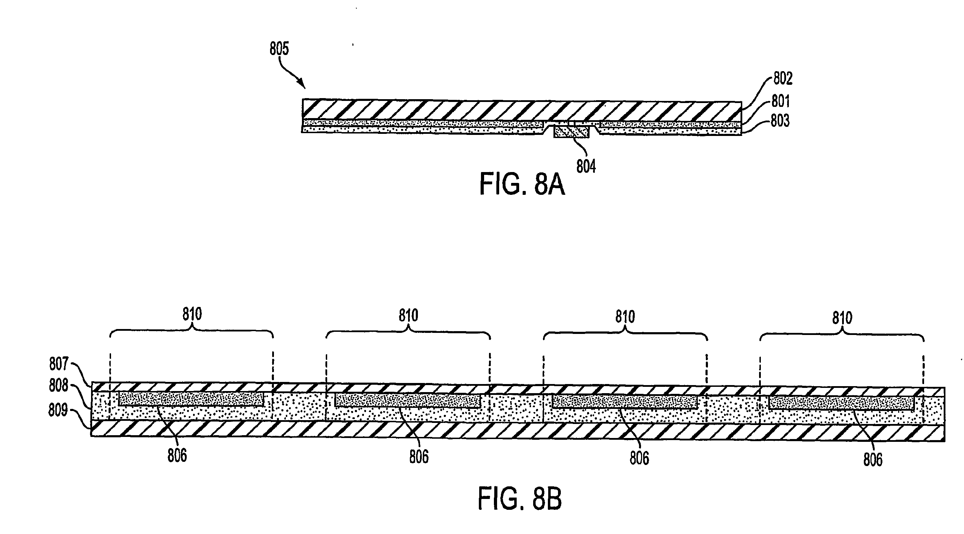

A preferred method of manufacture for the label configuration described above in relation to figure 7 is now described and illustrated schematically in figure 8, which shows illustrations of an RFID label construction and method of manufacture in cross sectional view.

The diagram of figure 8 illustrates a passive RFID label construction, in which the RFID components 402 consists of an RFID electronic memory chip.

A pattern 801 of adhesion modifying coating may be applied to the underside of a substrate layer 802, which may in one embodiment be a polyester layer. The tamper tracks 803 can be printed on the underside of the adhesion modifying coating. If necessary the tamper tracks can include a "cross-over", where a tamper track 803 crosses over itself along a bridging layer of electrical insulator. The tamper tracks 803 may be configured to form either an induction loop or antenna of appropriate design and characteristics. An RFID electronic memory chip 804 can then be mounted on the underside of the layer 802 and positioned to connect to appropriate terminating points on the tamper tracks 803. The RFID chip 804 and tamper tracks 803 should form an RFID transponder. The construction 805 consisting of substrate 802, adhesion,modifying coating 801, tamper tracks 803 and RFID chip 804 is cut into individual transponders 806. Each transponder 806 is placed in a specified position on the underside of a top coat layer 807 and may be fixed in position with a thin adhesive layer. A layer of pressure sensitive adhesive 808 may be applied to the underside of the top coat 807 and individual transponders 806. The resulting construction consisting of top coat layer 807, individual transponders 806 and adhesive layer 808 is mounted on a suitable carrier film 809 and produced in roll form. The resulting roll is die cut into individual labels 810 mounted on the continuous carrier film 809, where each label 810 includes one transponder 806.

In a variation on the method of manufacture illustrated in figure 8, the tamper tracks 803 may be produced using an electrically conducting adhesive instead of an electrically conducting ink.

### Tamper Indicating RFID Label with Tracking Capability

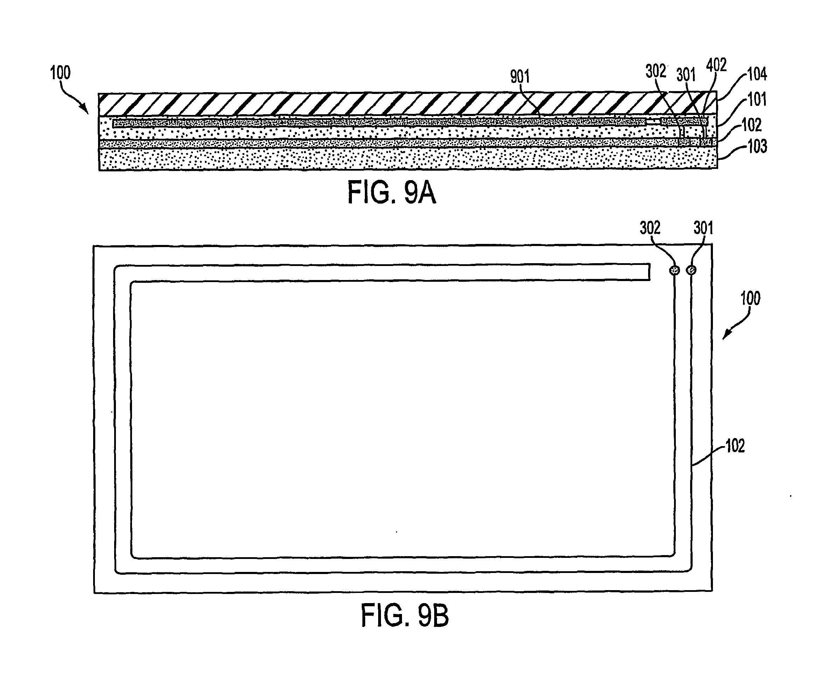

Figure 9 is a schematic illustration of another preferred embodiment in which the tamper track 102 forms part of a separate tamper indicating electrical circuit. As shown in figure 9 the RFID layer 101 may contain an induction loop or antenna 901 and other electronic components 402, including an electronic memory chip, to provide an RFID capability. The RFID layer 101 should be capable of interacting with an RFID reading device to allow reading of or modification to data stored in the electronic memory chip. The through-connect points 301 and 302 are connected to the components 402 in the layer 101, and to each other via the tamper track 102. The components 402 should be configured to respond differently to a signal from an RFID reader depending on whether or not the points 301 and 302 are connected to each other via the tamper track 102 or not. If the tamper track 102 is intact, the label 100 will respond in a specified manner to an RFID reader. On the other hand, if the label 100 is tampered, so that the tamper track 102 is damaged and the points 301 and 302 are no longer connected to each other via the tamper track 102, the label 100 should still respond to an RFID reader but in a different manner, thereby indicating that the label 100 has been tampered. In this way the label 100 of figure 9 can provide an RFID means to (i) determine whether the label 100 is present, (ii) read data from the label 100 and modify data stored in the label 100, and (iii) determine whether the label 100 has been tampered. In one preferred embodiment the components 402 may consist only of a passive RFID electronic memory chip, and the tamper track 102 forms a connection, which may be separate from the induction loop or antenna 901, between two contact points on the memory chip.

In a variation on the embodiments described above, the components 402 may undergo an irreversible change if the label 100 is tampered and the tamper track 102 is damaged, so that even if the tamper track 102 is subsequently restored, the label 100 will still respond to an RFID reader with a signal indicating it has been tampered. In one preferred embodiment the RFID components 402 is "active" (i.e. powered) and is configured to test the integrity of the tamper track 102 either continuously or at specified intervals. In this embodiment if the RFID components 402 detect that the tamper track 102 has been disrupted they may then preferably be configured to record data to this effect in the electronic memory chip within the components 402, preferably in a manner which is permanent and irreversible. Preferably, if the components 402 are active, they may also include a clock. In this case, the date and time of any tampering of the tamper track 102 or label 100 may also preferably be recorded permanently and irreversibly in the electronic memory chip within the RFID components 402.

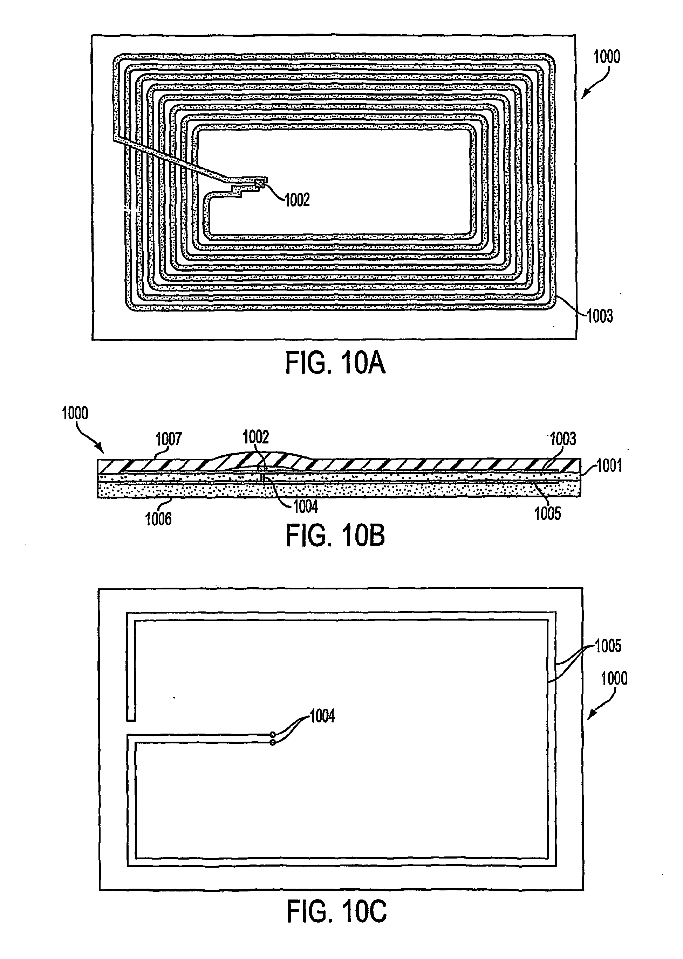

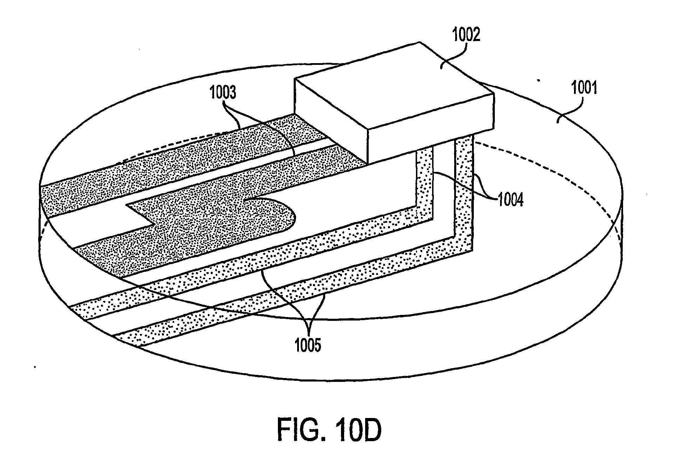

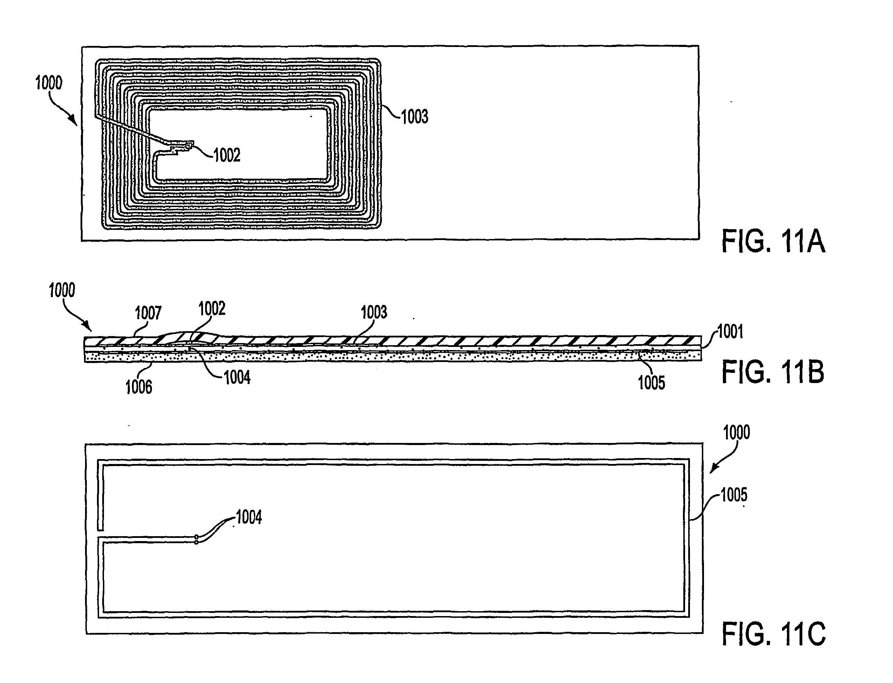

A preferred embodiment of the tamper indicating RFID label configuration of figure 9 will now be described by way of non-limiting example with reference to the schematic illustrations shown in figures 10 and 11.

It should be appreciated that the term antenna as used below may refer to a conventional antenna or to an induction loop (which is used as an antenna at some RFID operating frequencies).

Figure 10 is a schematic illustration of a tamper indicating RFID label 1000 shown in top view, cross sectional side view, and bottom view.

The label 1000 may include a substrate layer 1001 made of, for example, polyester or some other suitable material. On top of the substrate layer 1001,electronics to form an RFID transponder, which provides an RFID function, may be applied. The electronics may include an RFID electronic memory chip 1002 and an antenna 1003. (In figure 10 an antenna 1003 in the form of an induction loop is shown.)

Figure 11 is a more detailed schematic illustration of an example of the electrical connections to the electronic chip 1002.

The chip 1002 and antenna 1003 should provide an RFID capability, which may include the ability to store information in the chip 1002, the ability to read information from the chip 1002 at a distance using a suitable RFID device, and the ability to modify information in the chip 1002 from a distance using a suitable RFID device.

The chip 1002 may include two contact points, or contact pads, connected to the antenna 1003, as illustrated in figure 10(a).

The two contact pads on the chip 1002 can be connected via electrical "through-connects" 1004 to the underside of the substrate layer 1001. One or both or neither of these two contact pads may be the same as the contact pads used to connect the chip 1002 to the antenna 1003. Figure 10(a) shows the through-connects 1004 directly beneath the chip 1002. It should be appreciated that other configurations may instead be used for the through-connects 1004. In another preferred embodiment, the through-connects 1004 are positioned away from the contact pads on the chip 1002, and electrical tracks on the top surface of the substrate layer 1001 connect the contact pads on the chip 1002 to the tops of the through-connects 1004.

The two through-connect points 1004 on the underside of the substrate layer 1001 are connected to each other by means of a tamper track 1005 which is positioned on the underside of the substrate layer 1001.

A layer of adhesive 1006 may also be applied to the underside of the substrate layer 1001 and tamper track 1005. Preferably said adhesive 1006 is a pressure sensitive adhesive.

A top layer 1007 may be applied over the top of the substrate 1001, chip 1002 and antenna 1003. The top layer 1007 can provide protection for these components and can also provide a surface to accept printing - for example printing of a number, a barcode, a logo, or other image.

It should be appreciated that in figure 10 the top view is a view looking through the top layer 1007, the side view is a cross sectional side view, and the bottom view is a view looking though the adhesive layer 1006.

The tamper track 1005 is preferably applied to the underside of the substrate layer 1001, along with one or more layers of adhesion modifying coating to enhance the destructibility of the tamper track 1005. Consequently, if the label 1000 is applied to a surface and subsequently removed, the tamper track 1005 should be broken or disrupted so as to interrupt the electrical connection between the through-connect points 1004 on the underside of the substrate layer 1001. Application of the tamper track 1005 and any other adhesion modifying coatings to the underside of the substrate 1001 to enhance the destructible nature of the tamper track 1005 may preferably be carried out as described in the following provisional patent applications, which are incorporated by reference:
1. "A Tamper Indicating Radio Frequency Identification Label and Methods for the Manufacture Thereof ; Filed 28 July 2000; U.S. Provisional Patent Application No.: 60/221, 640
2. "A Tamper Indicating Radio Frequency Identification Label and Methods for the Manufacture Thereof" ; Filed 28 September 2000; U.S. Provisional Patent Application No.: to be advised

The tamper track 1005 may be laid out in a number of different ways on the underside of the substrate layer 1001. In the preferred embodiment illustrated in figure 10, the tamper track runs from one through-connect point 1004 almost all the way around the perimeter of the underside of the substrate layer 1001 and then back to the other through-connect point, with the outward and return paths of the tamper track 1005 very close together in order to avoid any electrical induction effects which may interfere with the antenna 1003 positioned above on the upper surface of the substrate layer 1001. The width and thickness of the tamper track 1005 can be adjusted to provide the correct properties in terms of electrical resistance and physical destructibility. The path made by the tamper track 1005 may run inside, or outside, or directly beneath the antenna 1003, which in figure 10 is an induction loop. In one preferred embodiment the tamper track 1005 forms a path which is outside the outer perimeter of the induction loop 1003, thereby ensuring that any disturbance around the perimeter of the label 1000 will cause the tamper track 1005 to be disrupted.

When the label 1000 is applied to a surface, the tamper track 1005 is intact and the corresponding contact pads on the chip 1002 are electrically connected to each other. When the label 1000 is removed or substantially tampered with, the tamper track 1005 should be broken or disrupted and there will then be an open circuit between the corresponding contact pads on the chip 1002. When such an open circuit occurs, the function of the RFID chip 1002 or the information stored in the chip 1002 will be modified in a way which can be detected by an RFID reader.

If the label 1000 is passive (i.e. without an on-board battery or other power source), the modified chip function or information can be detected during the first read operation of the label after the label 1000 is removed or tampered, and the reader (if it has a write capability) can be programmed to write data back to the chip 1002 to indicate that the label 1000 has been removed or tampered. Said data which is written back to the chip 1002 to indicate removal or tampering of the label 1000 is preferably permanent and irreversible, to prevent the memory contents of the chip being altered back to the original state to disguise the fact that the label has been moved or tampered. There is therefore disclosed herein an RFID read/write device capable of detecting the change in RFID performance of the label 1000 when the label 1000 is tampered, and writing data back to the chip 1002 within the label 1000 to indicate such tampering has occurred, said data preferably being written into the chip 1002 so as to be permanent and irreversible.

If the label 1000 is active (i.e. has an on-board battery or other power source), it can be configured such that any disruption to the tamper track 1005 can be detected internally within the label 1000 without requiring an RFID read operation. When such disruption to the tamper track 1005 is detected internally, the chip 1002 can be programmed to modify its own memory contents to indicate that the label 1000 has been removed or tampered. Said modification to the memory contents of the chip 1002 to indicate removal or tampering of the label 1000 should preferably be permanent and irreversible, to prevent the memory contents of the chip being altered back to the original state to disguise the fact that the label has been moved or tampered.

Hence the label 1000 may function as a normal RFID label when it is first applied to a surface. After is the label is moved or tampered, the RFID function of the label 1000 may be maintained and information can be read from and written to the RFID chip 1002, while the label also provides an RFID means to determine that it has been moved or tampered.

Figure 11 is a variation on the preferred embodiment of figures 9 and 10. The basic design of the label 1000 in figure 11 is the similar to that of figure 10. The difference in the design of figure 11 is that the tamper track 1005 extends well beyond the antenna 1003 or other RFID components in at least one direction. The tamper track 1005 should run around the perimeter of the label 1000 and detect tampering of any edge portion of the label, whether near the chip 1002 and antenna 1003 or at the end of the label away from these components. The label 1000 can, for example, be applied around a corner so that the chip 1002 and antenna 1003 are on a flat surface while the other end of the transponder, which includes the tamper track 1005, extends around the corner.

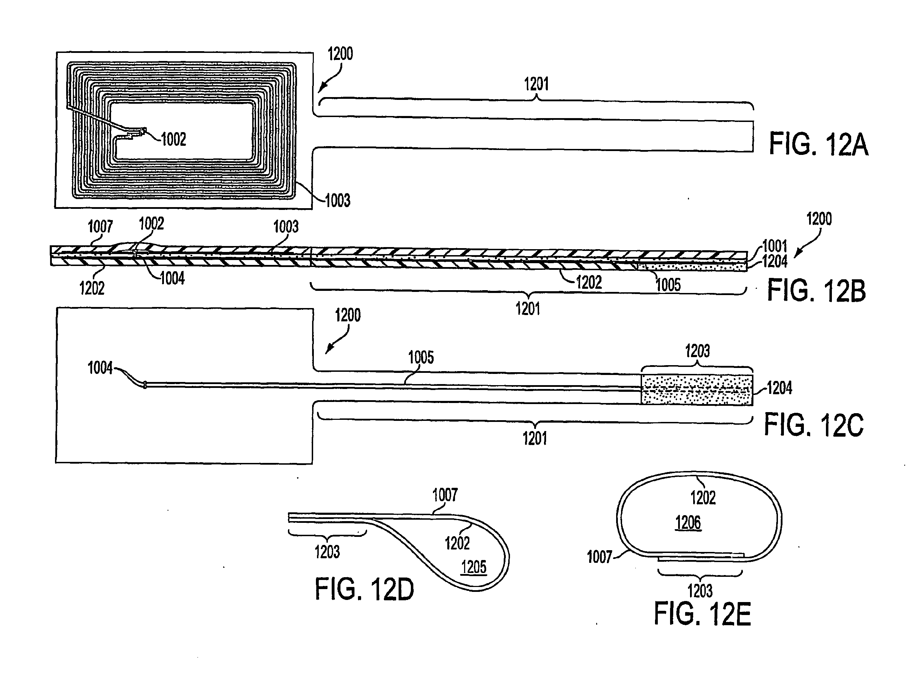

Figure 12 is another variation on the embodiment of figures 10 and 11. Figure 12 is a schematic illustration of a tamper indicating RFID loop tag 1200, shown in top view, side view and bottom view.

In figure 12, the tamper track 1005 on the underside of the substrate 1001 extends beyond the antenna 1003 and forms a "tail" 1201. In the embodiment shown in figure 12, the tamper track 1005 is straight. The substrate 1001 may be cut approximately to the shape of the electronics, so that the loop tag 1200 is broad at the end which includes the antenna 1003 and narrow at the tail 1201. Alternatively, the loop tag may be cut into any other shape around the electronic components. Preferably, the tamper track 1005 will extend to the end of the tail 1201.

A bottom layer 1202 may also be applied to a specific portion of the underside of the substrate 1001 and tamper track 1005. The tamper track should extend into the region 1203 of the underside of the substrate 1001 which is not covered with the bottom layer 1202. In the region 1203 where the bottom layer 1202 is not applied, an adhesive, such as a pressure sensitive adhesive 1204 may be applied to the underside of the substrate 1001 and the tamper track 12100505.

A top layer 1007 may be applied over the top of the substrate 1001, chip 1002 and antenna 1003. The top layer 1007 may provide protection for these components and may also provide a surface to accept printing - for example printing of a number, a barcode, a logo, or other image.

It should be appreciated that in figure 12 the top view is a view looking through the top layer 1007 to the chip 1002 and antenna 1003, and the bottom view is a view looking through the bottom layer 1202 and adhesive 1204 to the tamper track 1005 and through-connects 1004.

In operation, the loop tag 1200 may be bent into a loop 1205 and the region 1203 of pressure sensitive adhesive can be pressed against a region of the bottom layer 1202, as shown. The pressure sensitive adhesive 1204 should hold the loop 1205 closed. In another variation, a loop 1206 may be formed by pressing the region 1203 of pressure sensitive adhesive 1204 against a region of the top layer 1007, as also shown. (It should be noted that the illustrations of the loops 1205 and 1206 do not show the internal components - such as the chip 1002, antenna 1003 and tamper track 1005 - or the separate layers of the loop tag construction.) The two regions of the loop tag which are joined together in this way by the pressure sensitive adhesive 1204 preferably both include electronics - for example, the chip 1002, or the antenna 1003, or the tamper track 1005 - in order to ensure the closed loop cannot be cut and the loop opened without the RFID performance of the loop tag 1200 being affected. For example, the tamper track tail 1201 may be looped back and fixed to another portion of the tamper track tail 1201 or may be looped back and fixed to a region of the underside of the antenna 1003 (as illustrated in the loop 1205). The substrate 1001, pressure sensitive adhesive 1204, tamper track 1005, and any adhesion modifying coatings which are applied (as described in relation to figures 9 and 10), are preferably designed as described herein such that the tamper track 1005 is damaged when the closed loop is pulled apart in the region of pressure sensitive adhesive 1204, thereby modifying the RFID performance of the loop tag 1200, as described above in relation to the label constructions of figures 9 and 10. A similar modification to the performance of the loop tag 1200 will occur if the closed loop 1205 or 1206 is cut in order to open the loop.

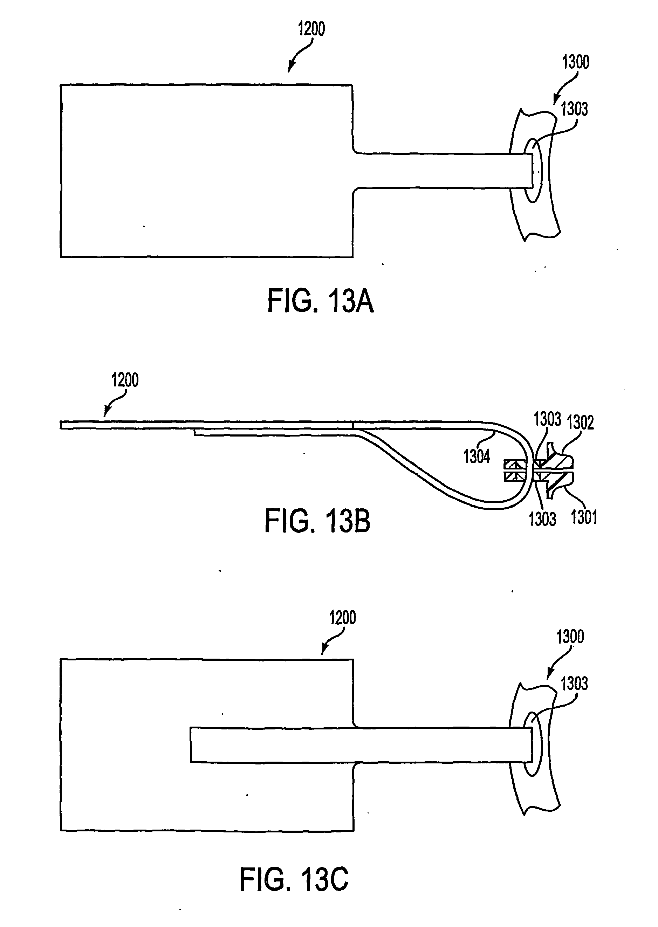

The loop tag configuration illustrated in figure 12 may be used to secure the tag 1200 around an item such as a handle, or to secure two items together. Figure 13 is a schematic illustration of the use of the loop tag 1200 to detect opening of a container 1300 which includes a body 1301 and lid 1302. The body 1301 and lid 1302 have holes 1303 which align when the lid 1302 is placed properly on the body 1301 of the container 1300. Figure 13 shows a cutaway cross sectional view of a portion of the body 1301 and lid 1302 of the container 1300 in the region of the holes 1303. In this embodiment the loop tag 1200 is applied to the container 1300 with the open loop portion 1304 passing through the aligned holes 1303. In this implementation the RFID chip 1002 in the loop tag 1200 may store information about the contents of the container 1300. If the loop tag 1200 is removed from the container 1300, either by pulling the loop apart to open the loop or by cutting the loop tag, the tamper track 1005 will be interrupted and the RFID performance of the loop tag 1200 will be modified in a manner detectable by an RFID reader, as described above in relation to the label construction of figures 9 and 10.

It should be appreciated that the loop tag 1200 does not need to have a narrow tail region. The loop tag may instead be rectangular in shape.

It should be appreciated that variations on the preferred embodiment of figure 9 to 12 are possible. For instance, taking the design of figure 10 as an example, the chip 1002, antenna 1003 and tamper track 1005 may all be on the underside of the substrate 1001. In this case it may be necessary for the tamper track to cross over the antenna 1003, on a "bridge" layer of electrically insulating material, in order to extend outside the antenna. The advantage of this embodiment is that the through-connects 1004 described in relation to the designs of figures 9 and 10 are not required.

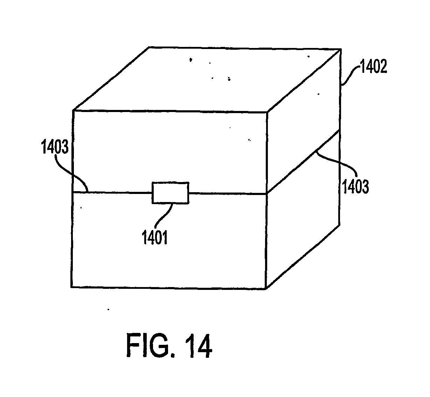

In another embodiment of the invention, a tamper indicating label is incorporated with an object to which the label is to be applied. The label used may be any of the embodiments described above. Figure 14 illustrates a label 1401 applied to an object 1402. A conductive path 1403 should be incorporated into the object. For example, a conducting path of electrically conducting ink may be formed around the object. The conducting path 1403 on the object 1402 should have at least two end points. The tamper tracks in the label 1401 should have a corresponding number of connection points. When the label 1401 is applied to the object 1402, each end point should be connected to a connection point. The conducting path on the object 1402 and the tamper tracks in the label 1401 should together form one or more circuits, each from a tamper track to an endpoint, through the conducting path on the object, to the other end point and back to a tamper track. If a tamper track is disrupted through the label 1401 being tampered, or if connection between a tamper track and the conducting path on the object 1402 is broken, the RFID function of the label 1401 may be modified in a manner as described above to indicate tampering. For example, if the label 1401 is applied to a cardboard box and the entire label and that part of the box the label is adhering to is cut out, tampering is indicated.

The embodiments illustrated and discussed in this specification are intended only to teach those skilled in the art the best way known to the inventors to make and use the invention. Nothing in this specification should be considered as limiting the scope of the present invention. The above-described embodiments of the invention may be modified or varied, and elements added or omitted, without departing from the invention as defined by the claims as appreciated by those skilled in the art in light of the above teachings. It is therefore to be understood that, within the scope of the claims and their equivalents, the invention may be practiced otherwise than as specifically described.

## Claims

1. A tamper indicating label (100) comprising:
an RFID layer (101) comprising RFID components providing an RFID function;
an adhesive layer (103) supporting the RFID layer (101);
a destructible electrically conducting path (102) sandwiched between the RFID layer (101) and the adhesive layer (103) so that at least a portion of the destructible conducting path (102) is in contact with the adhesive layer (103), whereby the destructible conducting path (102) is disrupted or modified when the label (100) is tampered, thereby modifying the RFID function of the RFID layer (101);
**characterized by**:
a pattern of an adhesion modifying coating between the RFID layer (101) and the adhesive layer (103), the adhesion modifying coating modifying adhesion characteristics of the destructible conducting path, thereby enhancing the destructibility of the destructible conducting path (102).

2. The tamper indicating label (100) of claim 1 wherein the destructible conducting path (102) is an RFID component.

3. The tamper indicating label (100) of any of claims 1 or 2 wherein the destructible conducting path (102) is connected to RFID components in the RFID layer (101).

4. The tamper indicating label (100) of any one of the preceding claims wherein the pattern of the adhesion modifying coating means includes at least two types of adhesion modifying coating.

5. The tamper indicating label (100) of any one of the preceding claims wherein the adhesion modifying coating is an adhesion modifying coating applied to a bottom surface of the RFID layer (101) and the destructible conducting path (102) is formed on the adhesion modifying coating.

6. The tamper indicating label (100) of any one of the preceding claims wherein the adhesion modifying coating is between the adhesive layer (103) and the destructible conducting path (102).

7. The tamper indicating label (100 of any one of the preceding claims further comprising a visual tamper indicator arranged under the RFID layer (101) and wherein the RFID layer (101) is substantially transparent whereby the visual tamper indicator is visible.

8. The tamper indicating label (100) of claim 7 wherein the visual tamper indicator is a colored layer and an adhesion-modifying substance is arranged between the RFID layer (101) and the adhesive layer (103), the adhesion-modifying substance causing the colored layer to have different adhesion strengths with respect to the RFID layer (101) and adhesive layer and thereby create a visual pattern on tampering of the label (100).

9. The tamper indicating label (100) of any one of the preceding claims, wherein the RFID layer (101) includes an RFID integrated circuit, and one of an antenna and an induction loop.

10. The tamper indicating label (100) of claim 1 or claim 4, further comprising:
a substrate supporting the RFID components, at least a part of the destructible conducting path (102) being in contact with the adhesive layer (103), whereby the destructible conducting path (102) is modified if the label (100) is at least partially removed from a surface to which it has been applied, thereby modifying RFID characteristics of the RFID components.

11. The tamper indicating label (100) of claim 10 further comprising:
a second conducting path formed on a top surface of the substrate;
the RFID components comprising an RFID integrated circuit on the top surface of the substrate, the RFID integrated circuit chip being connected to the second conducting path; and
through-connects linking the second conducting path with the destructible conducting path, which is formed on a bottom surface of the substrate.

12. The tamper indicating label (100) of claim 11 wherein the second conducting path and the destructible conducting path together form one of an antenna and an induction loop.

13. The tamper indicating label (100) of claim 11 wherein the second conducting path forms one of an antenna and an induction loop, and the destructible conducting path forms a functionally separate electrical circuit.

14. The tamper indicating label (100) of any of claims 10 to 13, further comprising a top coating formed over the top surface of the substrate.

15. The tamper indicating label of any of claims 10 to 14 wherein the adhesion modifying coating is between the substrate and the adhesive layer (103), the adhesion modifying coating causing the adhesion strengths of the destructible conducting path (102) to vary.

16. The tamper indicating label (100) of any one of the preceding claims wherein the destructible conducting path (102) must be intact for the RFID components to operate.

17. The tamper indicating label (100) of any one of claims 1 to 15 wherein the destructible conducting path (102) is a circuit functionally separate from the RFID components.

18. The tamper indicating label (100) of any one of the preceding claims, wherein the destructible conducting path (102) is a track of conducting material formed in a pattern that extends around substantially the entire circumference of a bottom surface of a substrate supporting the RFID components.

19. The tamper indicating label (100) of claim 1 wherein the RFID components include an induction loop or antenna and the destructible conducting path is formed in series with the induction loop or antenna.

20. The tamper indicating label (100) of claim 1, wherein the destructible conducting path (102) forms an induction loop or antenna.

21. The tamper indicating label (100) of claim 10, wherein the RFID components are applied to a bottom surface of the substrate, the destructible conducting path (102) is applied in a pattern to the bottom surface of the substrate, and the adhesive layer (103) supports the substrate such that the RFID components and the destructible conducting path (102) are sandwiched between the substrate and the adhesive layer (103), and wherein the adhesive layer (103), the substrate, and destructible conducting path (102) have relative adhesion strengths such that when the label (100) is partially removed from a surface to which it has been applied, at least one of the RFID components and the destructible conducting path (102) is altered to modify the RFID characteristics of the label.

22. The tamper indicating label (100) of any one of the preceding claims, wherein the RFID components test the destructible conducting path (102) and record data if the destructible conducting path (102) is interrupted.

23. The tamper indicating label (100) of claims 9 or 11 or 22, wherein the RFID integrated circuit is permanently altered when an interruption in the destructible conducting path (102) is detected.

24. The tamper indicating label (100) of claim 10, wherein the destructible conducting path (102) is arranged between a first side of the substrate and the adhesive layer (103), portions of the destructible conducting path (102) having different adhering strengths to the substrate and the adhesive layer (102) whereby the destructible conducting path is disrupted when the label (100) is tampered with, and an RFID integrated circuit arranged on a second side of the substrate and electrically connected to the destructible conducting path (102) via through connects in the substrate, the RFID integrated circuit being connected to other RFID components to provide said RFID function and to detect any disruption in the destructible conducting path (102) while maintaining the RFID function.

25. The tamper indicating label (100) of claim 24, wherein the RFID integrated circuit is electrically connected to the destructible conducting path (102) via contact pads.

26. The tamper indicating label (100) of claim 25, comprising two said contact pads connected to the destructible conducting path (102).

27. The tamper indicating label (100) of any of claims 24 to 26, wherein the RFID integrated circuit is permanently altered when the destructible conducting path (102) is disrupted.

28. The tamper indicating label (100) of any of claims 24 to 27, further comprising one of an antenna and an induction loop formed on the second side of the substrate and connected to the RFID integrated circuit.

29. The tamper indicating label (100) of claim 28, wherein said one of an antenna and an induction loop is connected to the RFID integrated circuit via two contact pads.

30. The tamper indicating label (100) of any of claims 24 to 29 wherein when the destructible conducting path (102) is interrupted, or substantially disrupted, the functions or characteristics of the RFID integrated circuit are altered in a manner detectable by an RFID reading device so as to indicate the destructible conducting path (102) has been interrupted or substantially disrupted.

31. A tamper indicating label (100) according to claim 10 further comprising:
the substrate having first and second portions, the second portion being adapted to be looped back and connected to the first portion to form a closed loop;
the destructible conducting path (102) being coupled to the RFID components and extending at least partially into the second portion of the substrate; and
wherein the adhesive layer (103) is arranged on at least a part of the substrate in the second portion that contains the destructible conducting path (102); and
wherein the adhesion modifying coating is applied in the region of the adhesive layer (103).

32. The tamper indicating label (100) of claim 31 wherein the second portion is connected to the first portion by the adhesive layer (103) in an area where either the RFID components or the destructible conducting path (102) are arranged.

33. The tamper indicating label (100) of any of claims 31 and 32 wherein a second adhesive layer is arranged on the first portion of the substrate in an area where the second portion is connected.

34. The tamper indicating label (100) of any of claims 31 to 33 further comprising a top or bottom layer formed on regions of the substrate where the adhesive layer (103) is not present.

35. The tamper indicating label (100) of any one of claims 31 to 34, wherein the RFID components maintain their RFID function if the closed loop is tampered or cut so that the destructible conducting path (102) is modified, and also detect a modification in the destructible conducting path (102) due to the closed loop being tampered or cut.

36. A tamper indicating label (100) according to any one of the preceding claims, , wherein the RFID components comprise means for detecting and indicating a disruption in the destructible conducting path (102).

37. The tamper indicating label (100) of claim 36, wherein the RFID components further comprise an RFID integrated circuit with an electronic memory, with the memory contents of the RFID integrated circuit being modified when a disruption in the destructible conducting path (102) is detected.

38. The tamper indicating label (100) of claim 37, wherein the RFID components further comprise a clock, the RFID integrated circuit recording the date and time when the disruption is detected.

39. The tamper indicating label (100) of any of claims 37 to 38, wherein the memory contents of the RFID integrated circuit are permanently modified.

40. The tamper indicating label (100) of any of claims 36 to 39, wherein the RFID components are active RFID components.

41. The tamper indicating label (100) of any of claims 36 to 39, wherein the RFID components are passive RFID components.

42. The tamper indicating label (100) of any of claims 36 to 41, wherein the RFID components further comprise an induction loop or antenna.

43. The tamper indicating label (100) of claim 17 wherein the RFID components include an induction loop or antenna and the destructible conducting path (102) is formed in parallel with said induction loop or antenna.

44. The tamper indicating label (100) of any one of the preceding claims, wherein the adhesive layer (103) comprises pressure sensitive adhesive.

45. The tamper indicating label (100) of claim 27, wherein the contact pads defined in claim 29 are different contact pads from those defined in claim 25.

46. The tamper indicating label (100) of any of the preceding claims, wherein the destructible conducting path (102) is formed using an electrically conducting ink.

47. A security apparatus for indicating tampering, comprising:
an object having a conducting path with at least two end points;
a tamper indicating label (100) according to any of the preceding claims arranged on the object, the destructible conducting path (102) of the tamper indicating label (100) extending between the RFID components and individual end points.

48. The apparatus of claim 47 wherein a disruption to the destructible conducting path or the conducting path (102) causes a detectable modification to the RFID function of said RFID components.

49. The apparatus of claim 47 or 48 wherein the RFID components respond in a pre-determined manner when a connection between the RFID components and the end points is interrupted or substantially disrupted, or when the electrical pathway through the conducting path (102) and the destructible conducting path (102) is interrupted or substantially modified.

50. The combination of a tamper indicating label (100) according to any one of claims 1 to 46 and an object, wherein the object comprises a surface for receiving the security label, a second conducting path having two ends, the ends of the second conducting path being coupled to the destructible conducting path of the tamper indicating label (100) thereby forming a circuit through the RFID components, the destructible conducting path (102) and the second conducting path, whereby RFID characteristics of the RFID components are modified if the connection between the end points and the RFID components, via the destructible conducting path (102), or through the second conducting path, is interrupted or substantially disrupted.

## Patentansprüche

1. Etikett (100) mit Anzeige einer unerlaubten Manipulation, umfassend:
eine RFID-Schicht (101), welche RFID-Komponenten umfasst, die eine RFID-Funktion bereitstellen;
eine Kleberschicht (103), welche die RFID-Schicht (101) stützt;
einen zerstörbaren elektrischen Strompfad (102), der zwischen der RFID-Schicht (101) und der Kleberschicht (103) so angeordnet ist, dass sich zumindest ein Teil des zerstörbaren Strompfads (102) in Kontakt mit der Kleberschicht (103) befindet, wobei der zerstörbare Strompfad (102) unterbrochen oder modifiziert wird, wenn das Etikett (100) unerlaubt manipuliert wird und **dadurch** die RFID-Funktion der RFID-Schicht (101) modifiziert;
**gekennzeichnet durch**:
ein Muster einer Haftung modifizierenden Beschichtung zwischen der RFID-Schicht (101) und der Kleberschicht (103), wobei die Haftung modifizierende Beschichtung Haftungskennlinien des zerstörbaren Strompfads modifiziert und **dadurch** die Zerstörbarkeit des zerstörbaren Strompfads (102) verstärkt.

2. Etikett (100) mit Anzeige unerlaubter Manipulation nach Anspruch 1, wobei der zerstörbare Strompfad (102) eine RFID-Komponente ist.

3. Etikett (100) mit Anzeige unerlaubter Manipulation nach Ansprüchen 1 oder 2, wobei der zerstörbare Strompfad (102) mit den RFID-Komponenten in der RFID-Schicht (101) verbunden ist.

4. Etikett (100) mit Anzeige unerlaubter Manipulation nach einem beliebigen der vorhergehenden Ansprüche, wobei das Muster des Haftung modifizierenden Beschichtungsmittels mindestens zwei Typen von Haftung modifizierender Beschichtung einschließt.

5. Etikett (100) mit Anzeige unerlaubter Manipulation nach einem beliebigen der vorhergehenden Ansprüche, wobei die Haftung modifizierende Beschichtung eine Haftung modifizierende Beschichtung ist, die auf die untere Fläche der RFID-Schicht (101) aufgebracht wird und der zerstörbare Strompfad (102) wird auf der Haftung modifizierenden Beschichtung gebildet.

6. Etikett (100) mit Anzeige unerlaubter Manipulation nach einem beliebigen der vorhergehenden Ansprüche, wobei die Haftung modifizierende Beschichtung zwischen der Kleberschicht (103) und dem zerstörbaren Strompfad (102) liegt.

7. Etikett (100) mit Anzeige unerlaubter Manipulation nach einem beliebigen der vorhergehenden Ansprüche, das weiter einen visuellen Anzeiger unerlaubter Manipulation umfasst, der unter der RFID-Schicht (101) angeordnet ist und, wobei die RFID-Schicht (101) wesentlich transparent ist, wodurch der Anzeiger für unerlaubte Manipulation sichtbar ist.

8. Etikett (100) mit Anzeige unerlaubter Manipulation nach Anspruch 7, wobei der visuelle Anzeiger für unerlaubte Manipulation eine Farbschicht ist und eine Haftung modifizierende Substanz zwischen der RFID-Schicht (101) und der Kleberschicht (103) angeordnet ist, wobei die Haftung modifizierende Substanz bewirkt, dass die Farbschicht unterschiedliche Haftfestigkeiten in Bezug auf die RFID-Schicht (101) and Kleberschicht hat und **dadurch** ein visuelles Muster auf dem unerlaubte Manipulation anzeigenden Etikett (100) erzeugt.

9. Etikett (100) mit Anzeige unerlaubter Manipulation nach einem beliebigen der vorhergehenden Ansprüche, wobei die RFID-Schicht (101) einen integrierten RFID-Schaltkreis und einen Schaltkreis einer Antenne und einer Induktionsschleife einschließt.

10. Etikett (100) mit Anzeige einer unerlaubten Manipulation nach Anspruch 1 oder Anspruch 4, weiter umfassend:
ein die RFID-Komponenten stützendes Substrat, wobei zumindest ein Teil des zerstörbaren Strompfads (102) in Kontakt mit der Kleberschicht (103) ist, wodurch der zerstörbare Strompfad (102) modifiziert wird, wenn das Etikett (100) zumindest teilweise von einer Oberfläche entfernt wird, auf die es aufgetragen wurde und **dadurch** die RFID-Kennlinien der RFID-Komponenten modifiziert.

11. Etikett (100) mit Anzeige einer unerlaubten Manipulation nach Anspruch 10, weiter umfassend:
einen zweiten Strompfad, der auf einer oberen Fläche des Substrats gebildet ist;
die RFID-Komponenten, die eine integrierte RFID-Schaltung auf der oberen Fläche des Substrats umfassen, wobei der Chip des integrierten RFID-Schaltkreises mit dem zweiten Strompfad verbunden ist; und
Durchkontaktierungen, die den zweiten Strompfad mit dem zerstörbaren Strompfad verbinden, der auf einer unteren Fläche des Substrats gebildet ist.

12. Etikett (100) mit Anzeige einer unerlaubten Manipulation nach Anspruch 11, wobei der zweite Strompfad und der zerstörbare Strompfad zusammen einen Pfad einer Antenne und einer Induktionsschleife bilden.

13. Etikett (100) mit Anzeige einer unerlaubten Manipulation nach Anspruch 11, wobei der zweite Strompfad einen Pfad einer Antenne und einer Induktionsschleife bilden und der zerstörbare Strompfad einen funktionell separaten elektrischen Stromkreis bildet.

14. Etikett (100) mit Anzeige einer unerlaubten Manipulation nach einem beliebigen der Ansprüche 10 bis 13, das weiter eine obere Beschichtung umfasst, die über der oberen Fläche des Substrats gebildet ist.

15. Etikett (100) mit Anzeige einer unerlaubten Manipulation nach einem beliebigen der Ansprüche 10 bis 14, wobei die Haftung modifizierende Beschichtung zwischen dem Substrat und der Kleberschicht (103) liegt, wobei die Haftung modifizierende Beschichtung Variieren der Haftfestigkeiten des zerstörbaren Strompfads (102) bewirkt.

16. Etikett (100) mit Anzeige einer unerlaubten Manipulation nach einem beliebigen der vorhergehenden Ansprüche, wobei der zerstörbare Strompfad (102) zum Funktionieren der RFID-Komponenten intakt sein muss.

17. Etikett (100) mit Anzeige einer unerlaubten Manipulation nach einem beliebigen der Ansprüche 1 bis 15, wobei der zerstörbare Strompfad (102) ein von den RFID-Komponenten funktionell separater Stromkreis ist.

18. Etikett (100) mit Anzeige einer unerlaubten Manipulation nach einem beliebigen der vorhergehenden Ansprüche, wobei der zerstörbare Strompfad (102) ein Leiterzug aus leitendem Material ist, das in einem Muster gebildet ist, das sich wesentlich um den ganzen Umfang einer unteren Fläche eines Substrats erstreckt, das die RFID-Komponenten stützt.

19. Etikett (100) mit Anzeige einer unerlaubten Manipulation nach Anspruch 1, wobei die RFID-Komponenten eine Induktionsschleife oder Antenne einschließen und der zerstörbare Strompfad in Reihe mit der Induktionsschleife oder Antenne gebildet ist.

20. Etikett (100) mit Anzeige unerlaubter Manipulation nach Anspruch 1, wobei der zerstörbare Strompfad (102) eine Induktionsschleife oder Antenne bildet.

21. Etikett (100) mit Anzeige unerlaubter Manipulation nach Anspruch 10, wobei die RFID-Komponenten auf eine untere Fläche des Substrats aufgebracht werden, der zerstörbare Strompfad (102) in einem Muster auf die untere Fläche des Substrats aufgebracht wird und die Kleberschicht (103) das Substrat so stützt, dass die RFID-Komponenten und der zerstörbare Strompfad (102) zwischen dem Substrat und der Kleberschicht (103) angeordnet sind und, wobei die Kleberschicht (103), das Substrat und der zerstörbare Strompfad (102) relative Haftfestigkeiten aufweisen, sodass, wenn das Etikett (100) teilweise von einer Fläche entfernt wird, auf die es aufgebracht wurde, wird zumindest eine der RFID-Komponenten und der zerstörbare Strompfad (102) geändert, um die RFID-Kennlinien des Etiketts zu modifizieren.

22. Etikett (100) mit Anzeige unerlaubter Manipulation nach einem beliebigen der vorhergehenden Ansprüche, wobei die RFID-Komponenten den zerstörbaren Strompfad (102) prüfen und Daten aufzeichnen, wenn der zerstörbare Strompfad (102) gestört wird.

23. Etikett (100) mit Anzeige unerlaubter Manipulation nach Ansprüchen 9 oder 11 oder 22, wobei der integrierte RFID-Schaltkreis permanent geändert wird, wenn eine Störung im zerstörbaren Strompfad (102) festgestellt wird.

24. Etikett (100) mit Anzeige unerlaubter Manipulation nach Anspruch 10, wobei der zerstörbare Strompfad (102) zwischen einer ersten Seite des Substrats und der Kleberschicht (103) angeordnet ist, Teile des zerstörbaren Strompfads (102) unterschiedliche Haftfestigkeiten am Substrat und der Kleberschicht (102) aufweisen, wodurch der zerstörbare Strompfad unterbrochen wird, wenn das Etikett (100) unerlaubt manipuliert wird und ein integrierter RFID-Schaltkreis auf einer zweiten Seite des Substrats angeordnet und elektrisch mit dem zerstörbaren Strompfad (102) über Durchkontaktierungen im Substrat verbunden ist, wobei der integrierte RFID-Schaltkreis mit anderen RFID-Komponenten verbunden ist, um besagte RFID-Funktion bereitzustellen und irgendeine Unterbrechung im zerstörbaren Strompfad (102) festzustellen, während die RFID-Funktion beibehalten wird.

25. Etikett (100) mit Anzeige unerlaubter Manipulation nach Anspruch 24, wobei der integrierte RFID-Schaltkreis über Kontaktanschlussflächen mit dem zerstörbaren Strompfad (102) verbunden ist.

26. Etikett (100) mit Anzeige unerlaubter Manipulation nach Anspruch 25, das zwei der besagten Kontaktanschlussflächen umfasst, die mit dem zerstörbaren Strompfad (102) verbunden sind.

27. Etikett (100) mit Anzeige unerlaubter Manipulation nach einem beliebigen der Ansprüche 24 bis 26, wobei der integrierte RFID-Schaltkreis permanent geändert wird, wenn der zerstörbare Strompfad (102) unterbrochen wird.

28. Etikett (100) mit Anzeige unerlaubter Manipulation nach einem beliebigen der Ansprüche 24 bis 27, das weiter eine Antenne und eine Induktionsschleife umfasst, die auf der zweiten Seite des Substrats gebildet und mit dem integrierten RFID-Schaltkreis verbunden sind.

29. Etikett (100) mit Anzeige unerlaubter Manipulation nach Anspruch 28, wobei besagte eine Antenne und eine Induktionsschleife über zwei Kontaktanschlussflächen mit dem integrierten RFID-Schaltkreis verbunden ist.

30. Etikett (100) mit Anzeige unerlaubter Manipulation nach einem beliebigen der Ansprüche 24 bis 29, wobei, wenn der zerstörbare Strompfad (102) gestört oder wesentlich unterbrochen wird, die Funktionen oder Kennlinien des integrierten RFID-Schaltkreises auf eine Weise geändert werden, die von einem RFID-Lesebauelement erkennbar ist, um anzuzeigen, dass der zerstörbare Strompfad (102) gestört oder wesentlich unterbrochen worden ist.

31. Etikett (100) mit Anzeige einer unerlaubten Manipulation nach Anspruch 10, weiter umfassend:
das Substrat mit ersten und zweiten Teilen, wobei der zweite Teil angepasst ist, rückgekoppelt zu werden und mit dem ersten Teil verbunden ist, um eine geschlossene Schleife zu bilden;
den zerstörbaren Strompfad (102), der an die RFID-Komponenten gekoppelt ist und sich zumindest teilweise in den zweiten Teil des Substrats erstreckt; und
wobei die Kleberschicht (103) auf zumindest einem Teil des Substrats im zweiten Teil angeordnet ist, der den zerstörbaren Strompfad (102) enthält; und
wobei die Haftung modifizierende Beschichtung im Bereich der Kleberschicht (103) aufgebracht ist.

32. Etikett (100) mit Anzeige einer unerlaubten Manipulation nach Anspruch 31, wobei der zweite Teil mit dem ersten Teil durch die Kleberschicht (103) in einem Bereich verbunden ist, wo entweder die RFID-Komponenten oder der zerstörbare Strompfad (102) angeordnet sind.

33. Etikett (100) mit Anzeige einer unerlaubten Manipulation nach einem beliebigen der Ansprüche 31 und 32, wobei eine zweite Kleberschicht auf dem ersten Teil des Substrats in einem Bereich angeordnet ist, wo der zweite Teil verbunden ist.

34. Etikett (100) mit Anzeige einer unerlaubten Manipulation nach einem beliebigen der Ansprüche 31 bis 33, das weiter eine obere oder untere Schicht umfasst, die auf Bereichen des Substrats gebildet sind, wo die Kleberschicht (103) nicht vorhanden ist.

35. Etikett (100) mit Anzeige einer unerlaubten Manipulation nach einem beliebigen der Ansprüche 31 bis 34, wobei die RFID-Komponenten ihre RFID-Funktion beibehalten, wenn die geschlossene Schleife unerlaubt manipuliert oder zertrennt wird, sodass der zerstörbare Strompfad (102) modifiziert wird und außerdem eine Modifikation im zerstörbaren Strompfad (102) **dadurch** erkennt, dass die geschlossene Schleife unerlaubt manipuliert oder zertrennt wurde.

36. Etikett (100) mit Anzeige einer unerlaubten Manipulation nach einem beliebigen der vorhergehenden Ansprüche, wobei die RFID-Komponenten Mittel zum Erkennen und Anzeigen einer Unterbrechung im zerstörbaren Strompfad (102) umfassen.

37. Etikett (100) mit Anzeige einer unerlaubten Manipulation nach Anspruch 36, wobei die RFID-Komponenten weiter einen integrierten RFID-Schaltkreis mit einem elektronischen Speicher umfassen, wobei der Speicherinhalt des integrierten RFID-Schaltkreises modifiziert wird, wenn eine Unterbrechung im zerstörbaren Strompfad (102) erkannt wird.

38. Etikett (100) mit Anzeige einer unerlaubten Manipulation nach Anspruch 37, wobei die RFID-Komponenten weiter einen Taktgeber umfassen, wobei der integrierte RFID-Schaltkreis Datum und Zeit aufzeichnet, wenn die Unterbrechung erkannt wird.

39. Etikett (100) mit Anzeige einer unerlaubten Manipulation nach einem beliebigen der Ansprüche 37 bis 38, wobei die Speicherinhalte des integrierten RFID-Schaltkreises permanent modifiziert sind.

40. Etikett (100) mit Anzeige einer unerlaubten Manipulation nach einem beliebigen der Ansprüche 36 bis 39, wobei die RFID-Komponenten aktive RFID-Komponenten sind.

41. Etikett (100) mit Anzeige einer unerlaubten Manipulation nach einem beliebigen der Ansprüche 36 bis 39, wobei die RFID-Komponenten passive RFID-Komponenten sind.

42. Etikett (100) mit Anzeige einer unerlaubten Manipulation nach einem beliebigen der Ansprüche 36 bis 41, wobei die RFID-Komponenten weiter eine Induktionsschleife oder Antenne umfassen.

43. Etikett (100) mit Anzeige einer unerlaubten Manipulation nach Anspruch 17, wobei die RFID-Komponenten eine Induktionsschleife oder Antenne einschließen und der zerstörbare Strompfad (102) parallel mit besagter Induktionsschleife oder Antenne gebildet ist.

44. Etikett (100) mit Anzeige einer unerlaubten Manipulation nach einem beliebigen der vorhergehenden Ansprüche, wobei die Kleberschicht (103) Haftkleber umfasst.

45. Etikett (100) mit Anzeige einer unerlaubten Manipulation nach Anspruch 27, wobei in Anspruch 29 definierten Kontaktanschlussflächen andere Kontaktanschlussflächen als jene sind, die in Anspruch 25 definiert sind.

46. Etikett (100) mit Anzeige einer unerlaubten Manipulation nach einem beliebigen der vorhergehenden Ansprüche, wobei der zerstörbare Strompfad (102) unter Einsatz einer elektrisch leitenden Tinte gebildet ist.

47. Sicherheitsvorrichtung zur Anzeige unerlaubter Manipulation, umfassend:
ein Objekt, das einen Strompfad mit zumindest zwei Endpunkten aufweist;
ein Etikett (100) mit Anzeige einer unerlaubten Manipulation nach einem beliebigen der vorhergehenden Ansprüche, das am Objekt angeordnet ist, wobei sich der zerstörbare Strompfad (102) des unerlaubte Manipulation anzeigenden Etiketts (100) zwischen den RFID-Komponenten und individuellen Endpunkten erstreckt.

48. Vorrichtung nach Anspruch 47, wobei eine Unterbrechung zum zerstörbaren Strompfad oder zum Strompfad (102) eine erkennbare Modifikation der RFID-Funktion besagter RFID-Komponenten bewirkt.

49. Vorrichtung nach Anspruch 47 oder 48, wobei die RFID-Komponenten auf eine vorbestimmte Weise reagieren, wenn eine Verbindung zwischen den RFID-Komponenten und den Endpunkten gestört oder wesentlich unterbrochen wird oder, wenn der elektrische Pfadverlauf durch den Strompfad (102) und den zerstörbaren Strompfad (102) gestört oder wesentlich modifiziert wird.

50. Kombination eines Etiketts (100) mit Anzeige einer unerlaubten Manipulation nach einem beliebigen der Ansprüche 1 bis 46 und eines Objekts, wobei das Objekt eine Fläche zur Aufnahme des Sicherheitsetiketts umfasst, ein zweiter Strompfad zwei Enden aufweist, wobei die Enden des zweiten Strompfads an den zerstörbaren Strompfad des Etiketts (100) mit Anzeige unerlaubter Manipulation gekoppelt sind und **dadurch** einen Stromkreis durch die RFID-Komponenten, den zerstörbaren Strompfad (102) und den zweiten Strompfad bilden, wodurch RFID-Kennlinien der RFID-Komponenten modifiziert werden, wenn die Verbindung zwischen den Endpunkten und den RFID-Komponenten, über den zerstörbaren Strompfad (102) oder durch den zweiten Strompfad gestört oder wesentlich unterbrochen wird.

## Revendications

1. Étiquette à indication de violation (100) comportant :
une couche RFID (101) comportant des composants RFID procurant une fonction RFID;
une couche adhésive (103) supportant la couche RFID (101) ;
un chemin électriquement conducteur destructible (102) pris en sandwich entre la couche RFID (101) et la couche adhésive (103) de sorte qu'au moins une partie du chemin conducteur destructible (102) est en contact avec la couche adhésive (103), ce par quoi le chemin conducteur destructible (102) est perturbé ou modifié quand l'étiquette (100) fait l'objet d'une violation, modifiant de ce fait la fonction RFID de la couche RFID (101) ;
**caractérisée par** :
un motif de revêtement de modification d'adhésion entre la couche RFID (101) et la couche adhésive (103), le revêtement de modification d'adhésion modifiant les caractéristiques d'adhésion du chemin conducteur destructible, renforçant de ce fait la destructabilité du chemin conducteur destructible (102).

2. Étiquette à indication de violation (100) selon la revendication 1, dans laquelle le chemin conducteur destructible (102) est un composant RFID.

3. Étiquette à indication de violation (100) selon la revendication 1 ou la revendication 2, dans laquelle le chemin conducteur destructible (102) est connecté à des composants RFID dans la couche RFID (101).

4. Étiquette à indication de violation (100) selon l'une quelconque des revendications précédentes, dans laquelle le motif du moyen de revêtement de modification d'adhésion comprend au moins deux types de revêtement de modification d'adhésion.

5. Étiquette à indication de violation (100) selon l'une quelconque des revendications précédentes, dans laquelle le revêtement de modification d'adhésion est un revêtement de modification d'adhésion appliqué sur une surface inférieure de la couche RFID (101) et le chemin conducteur destructible (102) est formé sur le revêtement de modification d'adhésion.

6. Étiquette à indication de violation (100) selon l'une quelconque des revendications précédentes, dans laquelle le revêtement de modification d'adhésion se trouve entre la couche adhésive (103) et le chemin conducteur destructible (102).

7. Étiquette à indication de violation (100) selon l'une quelconque des revendications précédentes, comportant par ailleurs un indicateur visuel de violation disposé sous la couche RFID (101) et dans laquelle la couche RFID (101) est sensiblement transparente ce par quoi l'indicateur visuel de violation est visible.

8. Étiquette à indication de violation (100) selon la revendication 7, dans laquelle l'indicateur visuel de violation est une couche colorée et une substance de modification d'adhésion est disposée entre la couche RFID (101) et la couche adhésive (103), la substance de modification d'adhésion amenant la couche colorée à avoir différentes forces d'adhésion par rapport à la couche RFID (101) et à la couche adhésive pour de ce fait créer un motif visuel lors de la violation de l'étiquette (100).

9. Étiquette à indication de violation (100) selon l'une quelconque des revendications précédentes, dans laquelle la couche RFID (101) comprend un circuit intégré RFID, et l'une quelconque d'une antenne et d'une boucle à induction.

10. Étiquette à indication de violation (100) selon la revendication 1 ou la revendication 4, comportant par ailleurs :
un substrat supportant les composants RFID, au moins une partie du chemin conducteur destructible (102) étant en contact avec la couche adhésive (103), ce par quoi le chemin conducteur destructible (102) est modifié si l'étiquette (100) est au moins partiellement retirée d'une surface sur laquelle elle a été appliquée, modifiant de ce fait les caractéristiques RFID des composants RFID.

11. Étiquette à indication de violation (100) selon la revendication 10, comportant par ailleurs :
un deuxième chemin conducteur formé sur une surface supérieure du substrat ;
les composants RFID comportant un circuit intégré RFID sur la surface supérieure du substrat, la puce du circuit intégré RFID étant connectée au deuxième chemin conducteur ; et
des connexions transversales reliant le deuxième chemin conducteur au chemin conducteur destructible, qui est formé sur une surface inférieure du substrat.

12. Étiquette à indication de violation (100) selon la revendication 11, dans laquelle le deuxième chemin conducteur et le chemin conducteur destructible forment ensemble l'une d'une antenne et d'une boucle à induction.

13. Étiquette à indication de violation (100) selon la revendication 11, dans laquelle le deuxième chemin conducteur forme l'une d'une antenne et d'une boucle à induction, et le chemin conducteur destructible forme un circuit électrique fonctionnellement séparé.

14. Étiquette à indication de violation (100) selon l'une quelconque des revendications 10 à 13, comportant par ailleurs un revêtement supérieur formé sur la surface supérieure du substrat.

15. Étiquette à indication de violation selon l'une quelconque des revendications 10 à 14, dans laquelle le revêtement de modification d'adhésion se trouve entre le substrat et la couche adhésive (103), le revêtement de modification d'adhésion amenant les forces d'adhésion du chemin conducteur destructible (102) à varier.

16. Étiquette à indication de violation (100) selon l'une quelconque des revendications précédentes, dans laquelle le chemin conducteur destructible (102) doit être intact pour que les composants RFID fonctionnent.

17. Étiquette à indication de violation (100) selon l'une quelconque des revendications 1 à 15, dans laquelle le chemin conducteur destructible (102) est un circuit fonctionnellement séparé des composants RFID.

18. Étiquette à indication de violation (100) selon l'une quelconque des revendications précédentes, dans laquelle le chemin conducteur destructible (102) est un tracé de matériau conducteur formé en un motif qui s'étend sensiblement autour de toute la circonférence d'une surface inférieure d'un substrat supportant les composants RFID.

19. Étiquette à indication de violation (100) selon la revendication 1, dans laquelle les composants RFID comprennent une boucle à induction ou une antenne et le chemin conducteur destructible est formé en série avec la boucle à induction ou l'antenne.

20. Étiquette à indication de violation (100) selon la revendication 1, dans laquelle le chemin conducteur destructible (102) forme une boucle à induction ou une antenne.

21. Étiquette à indication de violation (100) selon la revendication 10, dans laquelle les composants RFID sont appliqués sur une surface inférieure du substrat, le chemin conducteur destructible (102) est appliqué en un motif sur la surface inférieure du substrat, et la couche adhésive (103) supporte le substrat de sorte que les composants RFID et le chemin conducteur destructible (102) sont pris en sandwich entre le substrat et la couche adhésive (103), et dans laquelle la couche adhésive (103), le substrat, et le chemin conducteur destructible (102) ont des forces d'adhésion relatives de sorte que, quand l'étiquette (100) est partiellement retirée d'une surface sur laquelle elle a été appliquée, au moins l'un des composants RFID et du chemin conducteur destructible (102) est altéré pour modifier les caractéristiques RFID de l'étiquette.

22. Étiquette à indication de violation (100) selon l'une quelconque des revendications précédentes, dans laquelle les composants RFID testent le chemin conducteur destructible (102) et enregistrent des données si le chemin conducteur destructible (102) est interrompu.

23. Étiquette à indication de violation (100) selon les revendications 9 ou 11 ou 22, dans laquelle le circuit intégré RFID est altéré de manière permanente quand une interruption est détectée dans le chemin conducteur destructible (102).

24. Étiquette à indication de violation (100) selon la revendication 10, dans laquelle le chemin conducteur destructible (102) est disposé entre un premier côté du substrat et la couche adhésive (103), des parties du chemin conducteur destructible (102) ayant différentes forces d'adhésion sur le substrat et la couche adhésive (102) ce par quoi le chemin conducteur destructible est perturbé quand l'étiquette (100) fait l'objet d'une violation, et un circuit intégré RFID disposé sur un deuxième côté du substrat et électriquement connecté au chemin conducteur destructible (102) par le biais de connexions transversales dans le substrat, le circuit intégré RFID étant connecté à d'autres composants RFID pour procurer ladite fonction RFID et pour détecter toute perturbation dans le chemin conducteur destructible (102) tout en maintenant la fonction RFID.

25. Étiquette à indication de violation (100) selon la revendication 24, dans laquelle le circuit intégré RFID est électriquement connecté au chemin conducteur destructible (102) par le biais de plots de contact.

26. Étiquette à indication de violation (100) selon la revendication 25, comportant deux dits plots de contact connectés au chemin conducteur destructible (102).

27. Étiquette à indication de violation (100) selon l'une quelconque des revendications 24 à 26, dans laquelle le circuit intégré RFID est altéré de manière permanente quand le chemin conducteur destructible (102) est perturbé.

28. Étiquette à indication de violation (100) selon l'une quelconque des revendications 24 à 27, comportant par ailleurs l'une d'une antenne et d'une boucle à induction se trouvant sur le deuxième côté du substrat et avec connexion au circuit intégré RFID.

29. Étiquette à indication de violation (100) selon la revendication 28, dans laquelle ladite une d'une antenne et d'une boucle à induction est connectée au circuit intégré RFID par le biais de deux plots de contact.

30. Étiquette à indication de violation (100) selon l'une quelconque des revendications 24 à 29, dans laquelle, quand le chemin conducteur destructible (102) est interrompu, ou sensiblement perturbé, les fonctions ou caractéristiques du circuit intégré RFID sont altérées d'une manière détectable par un dispositif de lecture RFID de manière à indiquer que le chemin conducteur destructible (102) a été interrompu ou sensiblement perturbé.

31. Étiquette à indication de violation (100) selon la revendication 10, comportant par ailleurs :
le substrat ayant une première et une deuxième parties, la deuxième partie étant adaptée pour être bouclée et connectée à la première partie pour former une boucle fermée ;
le chemin conducteur destructible (102) étant accouplé aux composants RFID et s'étendant au moins partiellement dans la deuxième partie du substrat ; et
dans laquelle la couche adhésive (103) est disposée sur au moins une partie du substrat dans la deuxième partie qui contient le chemin conducteur destructible (102) ; et
dans laquelle le revêtement de modification d'adhésion est appliqué dans la région de la couche adhésive (103).

32. Étiquette à indication de violation (100) selon la revendication 31, dans laquelle la deuxième partie est connectée à la première partie par la couche adhésive (103) dans une zone où les composants RFID ou le chemin conducteur destructible (102) sont disposés.

33. Étiquette à indication de violation (100) selon l'une quelconque des revendications 31 et 32, dans laquelle une deuxième couche adhésive est disposée sur la première partie du substrat dans une zone où la deuxième partie est connectée.

34. Étiquette à indication de violation (100) selon l'une quelconque des revendications 31 à 33, comportant par ailleurs une couche supérieure ou inférieure formée sur des régions du substrat où la couche adhésive (103) n'est pas présente.

35. Étiquette à indication de violation (100) selon l'une quelconque des revendications 31 à 34, dans laquelle les composants RFID maintiennent leur fonction RFID si la boucle fermée fait l'objet d'une violation ou est coupée de sorte que le chemin conducteur destructible (102) est modifié, et détectent aussi une modification dans le chemin conducteur destructible (102) en raison de la boucle fermée ayant fait l'objet d'une violation ou ayant été coupée.

36. Étiquette à indication de violation (100) selon l'une quelconque des revendications précédentes, dans laquelle les composants RFID comportent des moyens pour détecter et indiquer une perturbation dans le chemin conducteur destructible (102).

37. Étiquette à indication de violation (100) selon la revendication 36, dans laquelle les composants RFID comportent par ailleurs un circuit intégré RFID ayant une mémoire électronique, le contenu de mémoire du circuit intégré RFID étant modifié quand une perturbation est détectée dans le chemin conducteur destructible (102).

38. Étiquette à indication de violation (100) selon la revendication 37, dans laquelle les composants RFID comportent par ailleurs une horloge, le circuit intégré RFID enregistrant la date et l'heure de la détection de la perturbation.

39. Étiquette à indication de violation (100) selon l'une quelconque des revendications 37 à 38, dans laquelle le contenu de mémoire du circuit intégré RFID est modifié de manière permanente.

40. Étiquette à indication de violation (100) selon l'une quelconque des revendications 36 à 39, dans laquelle les composants RFID sont des composants RFID actifs.

41. Étiquette à indication de violation (100) selon l'une quelconque des revendications 36 à 39, dans laquelle les composants RFID sont des composants RFID passifs.

42. Étiquette à indication de violation (100) selon l'une quelconque des revendications 36 à 41, dans laquelle les composants RFID comportent par ailleurs une boucle à induction ou une antenne.

43. Étiquette à indication de violation (100) selon la revendication 17, dans laquelle les composants RFID comprennent une boucle à induction ou une antenne et le chemin conducteur destructible (102) est formé parallèlement à ladite boucle à induction ou ladite antenne.

44. Étiquette à indication de violation (100) selon l'une quelconque des revendications précédentes, dans laquelle la couche adhésive (103) comporte un adhésif sensible à la pression.

45. Étiquette à indication de violation (100) selon la revendication 27, dans laquelle les plots de contact définis par la revendication 29 sont des plots de contact différents de ceux définis par la revendication 25.

46. Étiquette à indication de violation (100) selon l'une quelconque des revendications précédentes, dans laquelle le chemin conducteur destructible (102) est formé en utilisant une pâte électriquement conductrice.

47. Appareil de sécurité destiné à indiquer toute violation, comportant :
un objet ayant un chemin conducteur comportant au moins deux points d'extrémité ;
une étiquette à indication de violation (100) selon l'une quelconque des revendications précédentes disposée sur l'objet, le chemin conducteur destructible (102) de l'étiquette à indication de violation (100) s'étendant entre les composants RFID et les points d'extrémité individuels.

48. Appareil selon la revendication 47, dans lequel une perturbation du chemin conducteur destructible ou du chemin conducteur (102) amène une modification détectable au niveau de la fonction RFID desdits composants RFID.

49. Appareil selon la revendication 47 ou la revendication 48, dans lequel les composants RFID réagissent d'une manière prédéterminée quand une connexion entre les composants RFID et les points d'extrémité est interrompue ou sensiblement perturbée, ou quand le trajet électrique au travers du chemin conducteur (102) et du chemin conducteur destructible (102) est interrompu ou sensiblement modifié.

50. Combinaison d'une étiquette à indication de violation (100) selon l'une quelconque des revendications 1 à 46, et d'un objet, dans laquelle l'objet comporte une surface destinée à recevoir l'étiquette de sécurité, un deuxième chemin conducteur ayant deux extrémités, les extrémités du deuxième chemin conducteur étant accouplées au chemin conducteur destructible de l'étiquette à indication de violation (100) pour de ce fait former un circuit au travers des composants RFID, du chemin conducteur destructible (102) et du deuxième chemin conducteur, ce par quoi des caractéristiques RFID des composants RFID sont modifiées si la connexion entre les points d'extrémité et les composants RFID, par le biais du chemin conducteur destructible (102), ou au travers du deuxième chemin conducteur, est interrompue ou sensiblement perturbée.
